# EUROPEAN PATENT APPLICATION

(11) **EP 4 375 731 A1**
(43) Date of publication of application: **29.05.2024**
(21) Application number: 23208800.5
(22) Date of filing: 09.11.2023
(51) Int. Cl.: G02B 27/01

(54) **MANUFACTURE OF REFLECTION SUPPRESSION DEVICE**

(30) Priority: 18.11.2022 GB 202217284
(71) Applicant: Envisics Ltd, Milton Keynes MK1 1PT (GB)
(72) Inventor: XIA, Yiren, Milton Keynes, MK1 1PT (GB); SMEETON, Timothy, Milton Keynes, MK1 1PT (GB); COLE, Alexander, Milton Keynes, MK1 1PT (GB)
(74) Representative: Greenaway, Martin William

(57) **Abstract**

There is provided methods of manufacturing a reflection suppression device. The methods comprise a first step of forming a first component of the reflection suppression device by processing a transparent material to form a serrated surface Processing the transparent material comprises at least one selected from the group comprising extruding, injection moulding, hot embossing or cutting the transparent material. The methods further comprise a second step of forming a second component of the reflection suppression device by processing a light absorbing material to form a plurality of louvres arranged in an array. Processing the light absorbing material comprises at least one selected from the group comprising: adjoining, gluing, painting or supporting the light absorbing material in a support structure. At least one of the first and second steps comprises at least partially fixing the first component and second component together such that a periodicity of the serrated surface is equal to a periodicity of the array of louvres.

## Description

### FIELD

The present disclosure relates to a methods of manufacturing a reflection suppression device. More specifically, the present disclosure relates to a reflection suppression device for use with an optical component of a head-up display for a vehicle.

### BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micro-mirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD".

### SUMMARY

Aspects of the present disclosure are defined in the appended independent claims.

Broadly, there are disclosed herein methods for manufacturing a reflection suppression device that is able to control (e.g. reduce the negative effect of) incident sunlight that might cause glare when incident on an optical component (e.g. within a vehicle) without significantly altering the primary function of the optical component. There are also disclosed herein improved reflection suppression devices for a waveguide, picture or hologram generating unit or head-up display.

There is a need for reflection suppression devices in contexts in which a reflective optical element is susceptible to cause glare by reflecting sunlight onto an optical path to a user. For example, there may be a need for reflection suppression device in a head-up display for a vehicle. Such head-up displays typically comprise at least one reflective optical component such as a mirror, cover glass or a waveguide pupil expander other reflective optical surface that can receive sunlight. A head-up display is typically arranged such that light encoded with a picture content is directly or indirectly relayed towards an eye-box by reflective optical components. However, any reflective surface of any optical component may receive sunlight and potentially direct the sunlight to the eye-box (or viewing window) of the head-up display to cause glare. This could be distracting and uncomfortable for a driver of the vehicle.

The inventors have developed a reflection suppression device comprising an array of louvres angled so as to be effective at supressing glare from most angles without altering the function of the associated optical component (for example, without blocking picture-forming light). The louvres are elongated and relatively thin. For example, the louvres may have a length of 100-500 millimetres but a width of a few millimetres, optionally no more than a fraction of a millimetre. This means that the louvres are susceptible to elastic or inelastic deformation, particularly in a direction perpendicular to the length of the louvre. Deformed louvres may not properly block sunlight. Louvre deformation is a particular problem in the context of supressing reflections in a head-up display in a vehicle. The reflection suppression device preferably should have sufficient mechanical strength and rigidity to prevent vibrations of the vehicle from causing the louvres to substantially deform / flex. The inventors have found that fixing the louvres to a transparent support structure provided between the louvres can improve the strength and rigidity of the louvres and of the reflection suppression device as a whole. The inventors have also found that, if the transparent support structure is provided with a serrated surface, then additional unwanted light may advantageously be reflected away from an optical path of the optical component by the serrated surface and so this light may not contribute to glare either.

There is a need for a low-cost means to mass-produce such reflection suppression devices. However, the inventors have found that manufacturing a mechanically strong and rigid reflection suppression device comprising an array of louvres and transparent support structure (as above) is complex and modifications to conventional mass-production manufacturing techniques are required. The methods disclosed herein provide reliable, fast and efficient means for mass-producing reflection suppression devices.

In a first aspect there is provided a method of manufacturing a reflection suppression device. The method comprises a first step. The first step comprises forming a first component of the reflection suppression device by processing a transparent material to form a serrated surface. The serrated surface may be continuous or discontinuous. Processing the transparent material comprises at least one selected from the group comprising extruding, injection moulding, hot embossing or cutting the transparent material. The method further comprises a second step which may be performed before, simultaneously with or after the first step. The second step comprises forming a second component of the reflection suppression device by processing a light absorbing material to form a plurality of louvres arranged in an array. Processing the light absorbing material comprises at least one selected from the group comprising: adjoining, gluing, painting or supporting the light absorbing material in a support structure. At least one of the first and second steps comprises at least partially fixing the first component and second component together. The first and second component may be at least partially fixed together such that the serrations of the serrated surface of the first component is coordinated with the array of louvres. The first and second component may be at least partially fixed together such that a periodicity of the serrated surface is equal to a periodicity of the array of louvres. Herein, the periodicity of a serrated surface refers to the interval of individual serrations forming the serrated surface. In some embodiments, the step of at least partially fixing together the first and second components may be performed after at least one of the first component and second components has been formed.

The serrated surface may comprise a plurality of (individual) serrations, optionally an array of (individual) serrations. Each of the serrations may be formed by a portion of the serrated surface of the first component that is angled with respect to a general plane of the reflection suppression device. The or each portion of the serrated surface forming a serration may have a constant angle with respect to the plane of the reflection suppression device. In other words, the serration / angled surface may have a linear profile. The serrated surface may be described as having a sawtooth configuration or shape. Alternatively, the or each portion of the serrated surface forming a serration may have a changing angle with respect to the plane of the reflection suppression device. In other words, the serration / angled surface may have a curved profile.. In some embodiments, the serration of the sunlight-receiving surface provides an array of angled surfaces that direct sunlight. In the context of a head-up display, the angled surfaces may direct sunlight - including sunlight reflected by another optical component of the system - away from the eye-box. In particular, each of the angled surfaces forms an interface between the core material and air such that most of the sunlight incident thereon (e.g. more than 95% of incident sunlight) is reflected. As used herein, "light absorbing" (for example in the context of the light absorbing material) means that at least 90% of incident light, optionally at least 95%, optionally 99% of light incident thereon is absorbed. In some embodiments, light absorbing may mean that light incident thereon is substantially blocked. Thus, the louvres (formed of light absorbing material) may absorb at least 90% (optionally at least 95%, or 99%) of light incident thereon. The louvres may therefore be effective at absorbing sunlight / glare.

The first component formed in the first step of the method may comprise a first surface and a second surface opposite to the first surface. The first surface may form the (first) serrated surface described above. In some embodiments, the first step of the method may further comprise processing the transparent material to form a second serrated surface. The second surface may form the second serrated surface. The second serrated surface may be coordinated (e.g. have a periodic shape that is in-phase) with the first serrated surface. The periodicity of serrations of the second serrated surface may be equal to the periodicity of the serrations of the first surface (and so the periodicity of the serrations of the second serrated surface may also be equal to the periodicity of the array of louvres). The profile of the serrations of the first surface may be coordinated with profile of the serrations of the second surface. This may mean that the thickness of the first component may be substantially constant. The thickness may be defined as the size of the first component in a direction substantially normal to the plane defined by the reflection suppression device. In some embodiments, the serrations of the first surface may be parallel to the respective serrations of the second surface. This may be in embodiments where the profile of the serrations of the first (and second) surface is linear. The first and second serrated surfaces being coordinated may advantageously ensure that parallel light rays transmitted through different parts of the first component remain parallel when output from the transparent material. In particular, the light rays may exit the second surface at the same angle that the light rays are incident on the first surface (and vice versa). This means that the angle of light passing through the first component is independent of the incidence position of the light on the first component. This simplifies the geometry of the reflection suppression device and means that light intentionally transmitted through the reflection suppression device (for example, head-up display light) is not dispersed. This applies to both glare and light intentionally projected through the reflection suppression device (e.g. light of the head-up display). This is not the case in embodiments where the thickness of the first component is not constant or non-uniform.

In some embodiments, the first step comprises forming a first component as a single continuous component. Louvres may be at least partially fixed to the single continuous component after the single continuous component has been formed. In all embodiments, the first component is arranged to provide mechanical support and rigidity to the reflection suppression device. However, it may be particularly advantageous to provide the first component as a single continuous element as such a structure may be stronger and more rigid than a first component assembled from a plurality of smaller pieces. Furthermore, it may quicker to process / form a first component as a single component. Rather than manufacturing a plurality of pieces of first component individually, the first component may be provided in a single process. In contrast, in other case, it may be advantageous to manufacture a plurality of smaller sections of transparent material (e.g. transparent elements) and then arrange or combine them to form the first component.

In some embodiments, the first step comprises forming a plurality of transparent elements. Each of the transparent elements may comprise a serrated / angled surface, optionally a serrated / angled top surface. In such cases, the first step may further comprise assembling the plurality of transparent elements to form the first component. In some embodiments, each of the plurality of transparent elements is separated from an adjacent serrated element by a louvre in an assembled first component. In such embodiments, a discontinuous serrated surface may be formed. In some embodiments, each transparent element of the plurality of transparent elements may be immediately adjacent another transparent element. An advantage of assembling the first component from a plurality of transparent elements, rather than as a single component, is that the manufacturing method is more flexible. For example, a first component / reflection suppression device of any size may be formed simply be changing the number of transparent elements used to form the first component. In this way, the manufacturing method may be easily adapted to suit optical components having different dimensions. Another advantage is that forming the first component from a plurality of elements in this way more easily allows for the elements forming the first component to comprise different materials and different combinations of materials having different properties. For example, the plurality of serrated transparent elements may be formed from a soft polymer. This may be advantageous because shaping a soft polymer may be easier than shaping a hard material. However, a soft polymer on its own may not provide a first component with enough mechanical strength and rigidity to prevent deformation of the louvres. Thus the plurality of transparent elements may be combined with a substrate (or substrates) - i.e. a further feature of the first component - which does not need to be shaped to be serrated but which provides strength. The substrate (or substrates) may be formed of a harder and / or more rigid material than the soft polymer.

The transparent material that is processed in the first step may be a material having a refractive index of greater than 1. The first surface may be adjacent an air gap. So, the difference in refractive index of the transparent material and air may result in refraction of light incident on the first surface. This may bend the light. The louvres and serrations may be arranged such that the incident light is bent towards the louvres to be blocked by the louvres. This may assist in reflection / glare suppression. The transparent material may be formed of or comprise glass or a polymer such as silicone, resin, plastic.

In some embodiments, the transparent material may be provided in the form of an unshaped piece of material, for example a block or a slab of material, prior to the processing of the first step of the method. The unshaped piece of material may be in the form of a solid (i.e. in solid phase). The first step may then comprise extruding, hot embossing or cutting the unshaped piece of transparent material.

In some embodiments, the extruding, hot embossing or cutting may directly transform the unshaped piece of material into the first component (having a serrated surface, as described above). Such embodiments may result in the first component being formed as a single continuous component. In some embodiments, the transparent material (for example, the unshaped piece of material) may comprise a first surface and a second surface. The first step may comprise hot embossing or cutting the first surface of the transparent material to form a first serrated surface. The first step may further comprise hot embossing or cutting the second surface of the transparent material to form a second serrated surface. As described above, the first and second serrated surfaces may be coordinated with one another.

In some embodiments, the extruding, hot embossing or cutting may be used to form a plurality of (individual) transparent elements. The formation of the plurality of individual transparent elements may comprise shaping the transparent elements to each have at least one angled / serrated surface. In such embodiments, the first step may further comprise assembling the plurality of transparent elements to form the first component from the plurality of transparent elements. Assembling the transparent elements may comprise the step of at least partially fixing the first component and second component together.

In some embodiments, the transparent material may be provided as a (molten) liquid prior / during the first step of the method. The first step may comprise injection moulding the molten transparent material. In some embodiments, injection moulding may be used to directly form the first component from the liquid transparent material. This may be in combination with an appropriate mould. In some embodiments, injection moulding may be used to form a plurality of transparent elements. In such embodiments, the first step may further comprise assembling the plurality of transparent elements to form the first component from the plurality of injection moulded transparent elements. Assembling the injection moulded transparent elements may comprise the step of at least partially fixing the first component and second component together.

In some embodiments, the first step may comprise injection moulding the molten transparent material, for example into a mould, and may further comprise further processing of the transparent material after the injection moulding step. For example, the further processing of the transparent material may comprise at least one of hot embossing, cutting or otherwise shaping the transparent material. The further processing may comprise forming the serrated surface in the transparent material. For example, the first step may comprise injecting molten transparent material into a mould and allowing the molten transparent material to set, cure, cool or otherwise solidify. This may form a block of transparent material. The further processing may further comprise processing the block of transparent material, for example a top surface of the block of transparent material. The first step / processing may comprise (hot) embossing the top surface of the block of transparent material to form the serrated surface. The inventors have recognised that the combination of injection moulding with further processing can be advantageous. For example, injection moulding may be a fast and efficient method for forming a block of transparent material. Furthermore, as described below, injection moulding may advantageously allow the first and second components to be integrally formed (such that the step of forming the first component may be simultaneous with the step of partially fixing the first and second components). However, injection moulding may also have limitations, for example limitations in the smallest feature size that can easily be formed. Other processing techniques may more easily allow for the formation of small, precise features (such as the individual serrations of a serrated surface). Thus, by combining two processes, a first component can substantially be formed using injection moulding and finished (i.e. forming the serrated surface) using another process such as embossing.

In some embodiments, strips of continuous material may be supported in the mould prior to the injection moulding step. In such embodiments, the strips of continuous material may form an array of louvres which are embedded in or integrally formed within the transparent material after or as a result of the injection moulding step (and the cooling step). In some embodiments, the mould may comprise features such as inserts. Each of the inserts may form a blind channel or blind cavity in the transparent material / transparent block when the transparent material has been injected into the mould and then removed. In such embodiments, louvres may be formed in each of the blind channels / cavities.

The second step may comprise forming the louvres such that each louvre has a width defined between a proximal end and a distal end. Each louvre is arranged at an orientation angled relative to the general plane defined by the reflection suppression device, and wherein the separation between adjacent louvres is such that the distal end/edge of one louvre overlaps with the proximal end of the adjacent louvre. The overlap may be such that reflected light (or glare) is suppressed by the louvres at all input angles.

In some embodiments, the overlap is a spatial overlap. That is, a footprint of a first louvre overlaps with a footprint of a second louvre, wherein the first louvre is immediately adjacent the second louvre in the array of louvres. Alternatively, it may be said that a projection of the first louvre onto the first surface overlaps with a projection of the second louvre onto the first surface. In this way, the physical geometry of the array of louvres may be what suppresses reflections.

In some embodiments, the overlap is an optical overlap in which case the louvres may not necessarily spatially (i.e. physical) overlap. This is because it may not be necessary for the louvers to spatially overlap in order to achieved suppression of reflective light or glare at all angles of elevation of the sun / another glare light source. In particular, the transparent material (having a refractive index of greater than 1) may cause light (glare) to be refracted. The serrated nature (angle) of the first component may be such that the refracted light may be re-directed so that reflected light (or glare) is suppressed by the louvres at all input angles without the need of a spatial (i.e. physical) overlap of louvres. In this respect, it is said that the louvres "optically" overlap even though they may not physically overlap (in the vertical direction).

In some embodiments, the louvres are upstanding. In some embodiments, the louvres are tilted. In particular, the louvres may be tilted from an orthogonal orientation relative to the plane of the reflection suppression device and/or planar reflective surface of the optical component. The side walls of the louvres may be parallel such that the louvres are substantially rectangular. Alternatively, one or both of the sidewalls of the louvres may be sloped, such that each louvre has a trapezoid cross section. A cross-section of the louvres of the louvre array may have the appearance of a cross-section of a venetian blind. In some embodiments, each louvre may be elongated. Each louvre may extend substantially along a length or width of the reflection suppression device.

In some embodiments, the second step comprises forming the second component such that the louvres are tilted relative to a general plane of the reflection suppression device. The louvres formed in the second step are formed of a light absorbing material and so the louvres are configured to attenuate sunlight, such as absorb sunlight. In examples, all of the louvres in the array have substantially the same pitch, orientation and geometry. The thickness and angle of the louvres may be chosen so as to minimise the occlusion of light passing through the reflection suppression device at a particular angle. In the context of a head up display, the thickness and angle of the louvres may be chosen to minimise occlusion of picture-forming light relayed by the head-up display system through the reflection suppression device.

In some embodiments, the light absorbing material comprises a light absorbing paint. In such cases, step two of the method may comprise painting (the light absorbing paint). In some embodiments, this may comprise painting at least a portion (of one or more surfaces) of the first component. Painting the light absorbing material may be the most space efficient way to form a louvre. In particular, at least from certain angles, the thickness of a painted louvre may be minimised and so occlusion of (for example), head up display light may advantageously be minimised. The light absorbing paint may comprise pigments arranged to substantially absorb visible light. The light absorbing paint may be black paint.

In some embodiments, the light absorbing material has the form of a continuous strip. In some embodiments, the light absorbing material has the form of a plurality of continuous strips. Each strip of the plurality of continuous strips may be processed to form an individual louvre of the array of louvres. The continuous strip may have a thickness of 5 millimetres. The strip may have a length of 200 millimetres or more. The strip may comprise a light absorbing plastic, rubber, silicone or metal. Optionally, the strip further comprises a coating. A light absorbing material in the form of a continuous strip may be slightly thicker than a louvre painted directly on to the first component. So, such a continuous strip may occlude light (in particular, projected light from a head up display) slightly more than a painted louvre. However, the spacing between louvres formed of continuous strip may be an order of magnitude greater than the thickness of each strip. So, the amount of occlusion may still be acceptably small. Furthermore, providing the light absorbing material in the form of a continuous strip may allow for more efficient manufacturing methods. For example, as described below, it may be possible to lay up a mould with an array of louvres (in the form of a plurality of continuous strips) and then form the first component around the louvres, for example by injection moulding.

In some embodiments, the second step may comprise embedding the array of louvres in a transparent material. The transparent material may act as a support structure. In some embodiments, the array of louvres may be embedded in the transparent material that is processed to form the first component (for example, when the first component is formed by injection moulding the transparent material). In some embodiments, the array of louvres may be embedded in a different transparent material to the transparent material of the first component. In other words, the second component may comprise an array of louvres embedded in a transparent material.

The first step may comprise injection moulding the transparent material. The first step may comprise injection moulding the transparent material using a mould. The mould may comprise two primary parts or plates. The two primary plates may be separable from one another. The mould may comprise one or more cavities. The one or more cavities may be shaped according to predetermined shape of the component to be moulded. The one or more cavities may be defined when the first and second primary plates are in contact with one another. The mould may comprise one or more input ports. The mould may comprise one or more exit ports. Gates and runner lines may be defined in the mould and may connect the one or more input ports to the one or more cavities and on to the one or more output ports. During the first step, liquid or molten transparent material may be injected into the one or more input ports. The liquid or molten transparent material may then fill the one or more cavities before exiting out of the one or more output ports. The transparent material may be injected under pressure. The transparent material and / or the mould may be maintained at a temperature above ambient temperature while the transparent material is injected into the mould. The first step may further comprise cooling, setting and / or curing the transparent material after it has been injected into the one or more cavities. The first step may further comprise removing the cooled / set / cured transparent material from the mould.

The one or more cavities may be configured to shape the injected transparent material in accordance with a predetermined shape of the first component (or portions / elements of the first component). For example, the mould may comprise one or more cavities having at least a first surface arranged to form at least a portion of the serrated surface of the first component. The mould may comprise one or more cavities having a length that is 200 millimetres or more, optionally 300 millimetres or more. The one or more cavities may have a length of 500 millimetres or less, optionally 400 millimetres or less. The length of the one or more cavities may correspond to the length of the first component.

In some embodiments, the first step comprises injection moulding the transparent material to form the first component as a single piece. For example, the one or more cavities of the mould may be arranged (such as shaped) so that the first component can be formed as a single piece. In other words, the first component may be integrally formed. In such cases, advantageously, no assembly step may be required after the transparent material has been removed from the mould in order to form the first component. Furthermore, as above, such structures are advantageously mechanically strong and rigid. If there is more than one cavity, these cavities may be connected to one another and / or may be continuous in order to provide the first component as a single piece.

In some embodiments, the mould comprises a cavity having a first serrated surface. The mould may comprise only this cavity. The serrated surface may comprise a plurality of serrations. The serrations may form a continuous serrated surface. The first serrated surface of the cavity may form the first serrated surface of the first component (described above) when molten transparent material is injected into the cavity in the first step of the method. The cavity may have a second serrated surface. The second serrated surface may be on an opposite side of the cavity to the first serrated surface. The serrations of the second serrated surface may be coordinated with the serrations of the first serrated surface. The first and / or second serrated surfaces may have a sawtooth configuration. In some embodiments, the first serrated surface is defined by one of the primary parts of the mould and the second serrated surface is defined by the other of the primary parts of the mould. The second serrated surface of the cavity may form the second serrated surface of the first component (described above) when molten transparent material is injected into the cavity in the first step of the method.

In some embodiments, the one or more cavities of the mould are arranged such that the injection moulded first component comprises a frame and a plurality of serrated transparent elements. The one or more cavities of the mould may be arranged such that a first end of each of the transparent members is attached to (integrally formed with) the frame. The frame advantageously contributes to the mechanical strength of the reflection suppression device. The frame may be an artefact of the manufacturing process. If a reflection suppression device comprising a plurality of serrated transparent elements (forming a discontinuous serrated surface) is to be injection moulded as a single component, then liquid transparent material must be able to flow continuously throughout the mould. The mould may comprise a plurality of first cavities for forming a plurality of transparent elements. If liquid transparent material is flow through each of these first cavities, a further second (support) cavity may be provided in the mould which connects all of the first cavities. The inventors have realised that this second cavity can be used to form a first side of a frame. By placing the frame at an end of the first component, occlusion of light by the frame is minimised. Furthermore, the inventors have realised that the frame may provide additional strength and support to the manufactured reflection suppression device. The one or more cavities of the mould may be arranged such that the frame comprises a first side extending in a first direction. The one or more cavities of the mould may be arranged such that the plurality of serrated members extend in a second direction which is angled relative to the first direction, optionally perpendicular to the first direction. The one or more cavities of the mould may be arranged such that the frame comprises a second side opposite to the first side. The first side may be parallel to the second side. A second end of each of the serrated members (opposite to the first end) may be attached to (integrally formed with) the second side of the frame.

In some embodiments, the first step comprises injection moulding the transparent material and the second step comprises supporting the light absorbing material in a support structure. The support structure may be defined within the mould that is used for injection moulding the first component. The support structure may be defined within one or more cavities defined within the mould. The support structure may comprise a plurality of slots arranged to receive light absorbing material (for example, continuous strips of light absorbing material). At least one of the cavities of the mould (comprising slots) may be substantially planar. The slots may be arranged to maintain the light absorbing material at an angle with respect to the plane of the cavity. The first step comprises at least partially fixing the first component and second component together by injection moulding the transparent material into the mould. Thus, the first and second component may be integrally formed. This is advantageously a quick and simple way to manufacture a reflection suppression device comprising an array of louvres and a serrated first component. There is no need for the louvres to be individually fixed to different portions of the first component. Instead, the louvres can simply be laid up in the mould which is then filled with liquid transparent material and then set / dried / cured. The louvers of the second component may then be embedded in the first component. In other words, the first and second component may be integrally formed. In this embodiment, step two of the method may be performed prior to step one.

In some embodiments, the first step may comprise injection moulding individual features or elements of the first component separately from one another. For example, the first step may comprise injection moulding the plurality of (serrated) transparent elements, described above. Each of these transparent elements may be manufactured as stand-alone components (although, of course, a mould could be provided comprising a plurality of separate cavities for manufacturing a plurality of separate transparent elements simultaneously). The first step may further comprise assembling the first component using the individual features or elements such as the plurality of serrated transparent elements. As described in more detail below, the assembly step may comprise fixing transparent elements and louvres together in an alternating fashion to form the first component.

In some embodiments, the processing of the first step comprises forming a plurality of transparent elements. The plurality of transparent elements may be formed by injection moulding (as in the preceding paragraph, for example), extrusion or cutting a transparent material. The first step may comprise forming a first component comprising a plurality of transparent elements. Each transparent element may be substantially elongated. Each transparent element may extend in a first direction. At least a first surface, optionally a top surface, of each of the transparent members may be serrated. A second surface of each of the transparent members may also be serrated. When a plurality of transparent elements are suitably arranged (for example as an array), a serrated surface may be formed by the transparent elements. The serrated surface may be a discontinuous serrated surface. An array of transparent elements may define a sawtooth structure. The serrations may have a linear profile. The serrations may be parallel to one another. Each of the transparent elements may have quadrilateral cross-section. Each of the transparent elements may have a cross-section in the shape of a parallelogram. The parallel sides of the parallelogram may define the serrations.

The first step of the method may comprise at least partially fixing the first component to the second component. This may comprise at least partially fixing transparent elements and louvres in an alternating configuration. In some embodiments, at least partially fixing the first component to the second component comprises at least partially fixing a first transparent element to a first side of a first louvre and a second transparent element to a second side of a second louvre.

The first step of the method may comprise at least partially fixing a plurality of the transparent elements on to a transparent substrate also referred to herein as a core layer. The serrated surface of the first component may be formed by at least a surface of at least some of the transparent elements fixed to the transparent substrate. The transparent substrate may provide mechanical strength and rigidity to the first component. The provision of a transparent substrate may be particularly advantageous when the transparent elements are formed of a relatively softer material such as soft polymer (e.g. silicone). The transparent substrate may be substantially planar. The transparent substrate may comprises a first planar surface and a second planar surface. The first planar surface may be opposite to the first planar surface. The first step may comprise at least partially fixing a first plurality of the transparent elements on to the first planar surface of the transparent substrate and a second plurality of the transparent elements on to the second planar surface of the transparent substrate. Thus, the first step may comprise forming a first component comprising a first serrated surface and a second serrated surface, wherein the first serrated surface is formed by at least a surface of each of the first plurality of transparent elements and the second serrated surface is formed by at least a surface of each of the second plurality of transparent elements.

In some embodiments, the second step comprises painting the light absorbing material to form a plurality of louvres. In such embodiments, the light absorbing material may comprise a light absorbing paint. The second step may further comprise allowing the paint to dry or cure. The second step of the method (comprising painting the light absorbing material) may be performed during or after the first step. In some embodiments, the second step comprises painting the light absorbing material on to the formed first component. In such cases, the second step of the method may be performed after the first step of the method. In some embodiments, the second step comprises painting the light absorbing material on to at least a portion (for example, at least a portion of a surface of) each of a plurality of transparent elements formed in the first step. As described above, when the first step comprises forming a plurality of transparent elements, the first step may further comprise assembling the plurality of transparent elements. The second step may be performed after the plurality of transparent elements have been formed but before they are assembled (in other words, the second step may be performed during the first step). Alternatively, the second step may be performed after the plurality of transparent elements have been assembled (in other words, the second step may be performed after the first step).

The second step may comprise adjoining or gluing light absorbing material to form a plurality of louvres. In such cases, the light absorbing material may have the form of a continuous strip of material. The second step of the method (comprising gluing or adjoining the light absorbing material) may be performed during or after the first step. In some embodiments, the second step comprises gluing or adjoining the light absorbing material on to the formed first component. In such cases, the second step of the method may be performed after the first step of the method. In some embodiments, the second step comprises gluing or adjoining the light absorbing material on to at least a portion (for example, at least a portion of a surface of) each of a plurality of transparent elements formed in the first step. For example, the second step may be performed after the plurality of transparent elements have been formed but before they are assembled (in other words, the second step may be performed during the first step). In some embodiments, the second step may be performed after the plurality of transparent elements have been assembled (in other words, the second step may be performed after the first step).

When the second step comprises gluing the light absorbing material, the second step may comprise applying a layer of glue or adhesive on to the light absorbing material and / or on to the first component or plurality of transparent elements. The second step may comprise bringing the light absorbing material and first component (or respective transparent element) into contact. The second step may comprise curing, setting or drying the glue or adhesive. In some embodiments, the glue or adhesive may be a UV curing glue or adhesive. In this case, the curing step may comprise irradiating the glue or adhesive with ultraviolet light for a predetermined time. In some embodiments, the step of applying the glue may comprise the use of a photoresist process.

The glue or adhesive (when dry, set or cured) may have a refractive index that is substantially equal to the refractive index of the transparent material. In this way, the glue or adhesive may have a substantially similar optical performance as the transparent material. Such a selection of a glue or adhesive may reduce the aberration of light passing through the reflection suppression device at the boundary between the first component and each of the louvres. This aberration may otherwise affect a small proportion of glare to be transmitted by the reflection suppression at some specific angles.

In some embodiments, the method further comprises a third step. The step may be to at least partially fix a third component and the first component together. The third component may be a diffraction or diffractive film. The serrated surface may be a first (top) surface of the first component. The third step comprises at least partially fixing the fourth component to a second surface of the first component (the second surface being substantially opposite to the first surface). The diffractive film may comprise a layered structure arranged to redirects light by diffraction, for example rather than refraction or reflection. The diffractive film may be arranged to act as a holographic optical element. The diffractive film may be arranged such that light transmitted through the diffractive film is diffracted, optionally by holographic volume diffraction. The diffractive film may have a modulated refractive index. The diffractive film may comprise a photopolymer such as dichromated gelatin The photopolymer may be maintained between a first and second transparent substrate. The diffractive film may be arranged to compensate for refraction of light by the transparent material of the first component (which may have a refractive index of greater than one). This may be particularly advantageous in embodiments in which the thickness of the first component is variable. A variable thickness of the first component may cause dispersion of light (for example head-up display light) transmitted through the first component. The diffractive film may be arranged so that this dispersion of light is compensated for. For example, the diffractive film may comprise a diffractive structure (formed, for example, by index modulation of a photopolymer layer of the diffractive film) configured to steer the light. The diffractive structure may be repeated periodically along the length of the diffractive film. Each diffractive structure may be coordinated with or correspond to the serrations. Each diffractive structure may extend between adjacent louvres of the reflection suppression device.

In some embodiments, the method further comprises forming a fourth component by applying a transparent coating layer to the first and / or second component. The transparent coating layer may cover the serrated first surface. The transparent coating layer may cover the array of louvres. The transparent coating layer may advantageous act as protective cover for the reflection suppression device.

In a second aspect, there is provided a method of manufacturing a reflection suppression device. The method comprises a first step of forming a first component of the reflection suppression device by processing a transparent material to form a serrated surface. Processing the transparent material comprises at least one selected from the group comprising extruding, injection moulding or cutting the transparent material to form a plurality of transparent elements. The method further comprises a second step of forming a second component of the reflection suppression device by processing a light absorbing material to form a plurality of louvres arranged in an array. Processing the light absorbing material comprises at least one selected from the group comprising: adjoining, gluing or painting. The first and second steps comprise at least partially fixing the first component and second component together such that a periodicity of the serrated surface is equal to a periodicity of the array of louvres. The first step may further comprise assembling the plurality of transparent elements to form the first component. The step of at least partially fixing the first component and the second component may comprise at least partially fixing transparent elements and louvres in an alternating configuration.

At least partially fixing the first component to the second component may comprise at least partially fixing a first transparent element to a first side of a first louvre and a second transparent element to a second side of a second louvre. The second step may comprise adjoining or gluing the first transparent element to the first side of the first louvre and adjoining or gluing the first transparent element to the second side of the second louvre. Alternatively, at least partially fixing the first component to the second component may comprise painting at least a portion of a first side wall of each transparent element with a light absorbing paint. The method may then further comprise assembling the plurality of painted transparent elements to form the first component. The second step may comprise adjoining or gluing a first sidewall of a first transparent element to a second sidewall of a second transparent element, at least one of the first and second sidewalls being painted with light absorbing paint.

Each of the transparent elements may have an elongated shape with a quadrilateral cross-section, optionally a parallelogram shaped cross-section. The cross-section of each transparent element may comprise a first surface and a second surface. At least one of the first surface and the second surface may contribute to the serrated surface. A separation between the first surface and the second surface may be 50% or less, optionally 33% or less, the length of a louvre in the array of louvres. A separation between the first surface and the second surface may be substantially equal to the length of a louvre in the array of louvres.

In a third aspect, there is provided a method of manufacturing a reflection suppression device. The method comprises a first step of forming a first component of the reflection suppression device by processing a transparent material to form a serrated surface. Processing the transparent material comprises injection moulding molten transparent material. The method comprises a second step of forming a second component of the reflection suppression device by processing a light absorbing material to form a plurality of louvres arranged in an array. Processing the light absorbing material comprises at least one selected from the group comprising: adjoining or gluing. The second step further comprises at least partially fixing the first component and second component together such that a periodicity of the serrated surface is equal to a periodicity of the array of louvres. The first step may comprise manufacturing an integrally formed single first component. The second step may comprise adjoining or gluing a plurality of strips of light absorbing material to the first component to form the second component. The first step may comprise manufacturing an integrally formed single first component comprising a plurality of substantially parallel transparent members separated by spaces. The second step may comprise inserting the strips of light absorbing material in the spaces between the parallel transparent members.

In a fourth aspect, there is provided a method of manufacturing a reflection suppression device. The method comprises a first step of forming a first component of the reflection suppression device by processing a light absorbing material to form a plurality of louvres arranged in an array. Processing the light absorbing material comprises supporting the light absorbing material in a support structure. The method further comprises a second step of forming a second component of the reflection suppression device by processing a transparent material to form a serrated surface. Processing the transparent material comprises injection moulding molten transparent material. The second step comprises at least partially fixing the first component and second component together such that a periodicity of the serrated surface is equal to a periodicity of the array of louvres. The second step may comprise injection moulding the transparent material using a mould. The mould may comprise an array of slots forming the support structure. The first step may comprise supporting the light absorbing material in the array of slots. The mould may comprise one or more cavities. The second step may comprise cooling / setting / curing the transparent material.

In a fifth aspect, there is provided a method of manufacturing a reflection suppression device. The method comprises a first step of forming a first component of the reflection suppression device by processing a transparent material to form a serrated surface. Processing the transparent material comprises at least one selected from the group comprising injection moulding, hot embossing or cutting the transparent material. The method further comprises a second step of forming a second component of the reflection suppression device by processing a light absorbing material to form a plurality of louvres arranged in an array. Processing the light absorbing material comprises at least one selected from the group comprising: adjoining, gluing or painting. The second steps comprises at least partially fixing the first component and second component together such that a periodicity of the serrated surface is equal to a periodicity of the array of louvres. The first step may comprise forming the first component as a single integrally formed component. The second step may be performed after the first step. The first step may comprise hot embossing or cutting a block or slab of transparent material to form the first component. The block or slab of transparent material may comprise three layers including a core layer sandwiched between first and second layers, the first core layer comprising a first material and the first and second layers comprising a second material different to the first material. The first material may be softer than the second material. The block or slab may comprise a first surface and a second surface opposite to the first surface. The first step may comprise hot embossing or cutting the first surface to form the (first) serrated surface. The method may further comprise applying a diffraction film to the second surface.

The first step may further comprise hot embossing or cutting the second surface to form a second serrated surface of the first component, the second serrated surface being opposite to the first serrated surface. The (or each) serrated surface may comprise a series of first facet surfaces having a first angle with respect to a plane of the first component and a series of second facet surfaces having a second angle with respect to a plane of the first component, the first and second facet surfaces alternating with respect to one another. The second step may comprise adjoining, gluing or painting light absorbing material (a strip of or paint) on to each of the first facet surfaces.

The first step may comprise forming a plurality of transparent elements. The first step may comprise fixing, such as adjoining or gluing, the plurality of transparent elements on to a transparent core layer. The core layer may comprise a first surface and a second surface opposite to the first surface, and the first step may comprise fixing a first plurality of the plurality of transparent elements to the first surface of the core layer and fixing a second plurality of the plurality of transparent elements to the second surface of the core layer.

Each of the first to sixth aspects may be methods of manufacturing a reflection suppression device for a head-up display for a vehicle. The reflection suppression device may be for disposition on an optical component of the head-up display. The optical component may comprise a reflective surface. The optical component may be a mirror. The optical component may be waveguide comprising a reflective surface. The methods of each of the first to sixth aspects may additionally comprise positioning or depositing the reflection suppression device on to the optical component (for example, mirror or waveguide) of the head-up display.

In a seventh aspect there is provided a head-up display for a vehicle, wherein the head-up display comprises an optical component having a reflective surface arranged, during head-up display operation, in a configuration that is conducive to sunlight glare; and a reflection (or glare) suppression device disposed on the optical component to receive sunlight on an optical path to the reflective surface, wherein the reflection suppression device is a reflection suppression device manufactured according to one of the methods of the first to sixth aspects. For example, the reflection suppression device may comprise a first component formed of transparent material and having a serrated surface and a second component in form of a plurality of louvres (such as an array of louvres) comprising a light absorbing material. The first material and the second material may be at least partially fixed together such that a periodicity of the serrated surface is equal to a periodicity of the array of louvres.

In some embodiments, the louvres are tilted with respect to a plane of the reflection suppression device. In some embodiments, the louvres are configured to attenuate sunlight such as absorb sunlight. In some embodiments, the array of louvres is configured to transmit image light of the head-up display output by the optical component. In some embodiments, the optical component is a waveguide. Optionally, wherein the waveguide is substantially planar and, optionally, arranged during head-up display operation in a substantially flat configuration relative to ground. In some embodiments, the transparent material of the first component is substantially transmissive to image light of the head-up display. In some embodiments, the serration provides an array of angled surfaces having an angle of orientation to direct sunlight away from the eye-box. In some embodiments, the angled surfaces change the angle of reflection of sunlight received thereby. In some embodiments, the louvres of the array of louvres are substantially parallel. In some embodiments, each louvre of the array of louvres has substantially the same geometry.

In an eighth aspect there is provided a reflection suppression device comprising a first component. The first component is formed of a transparent material and comprises at least a first serrated surface. The second component comprises a plurality of louvres arranged in an array. The louvres comprise a light absorbing material. The first component is at least partially fixed to the second component such that a periodicity of the serrated surface is equal to a periodicity of the array of louvres.

The first component may have been formed by extruding, injection moulding or hot embossing a source of transparent material. The second component may have been formed by adjoining or gluing a plurality of strips of light absorbing material to the first component. The second component may have been formed by painting a light absorbing material on to surfaces of the first component.

The first component may comprise a first serrated surface and a second serrated surface opposite to the first serrated surface. The serrations of the first serrated surface may be coordinated with the serrations of the second serrated surface such that the periodicity of the serrations of the first serrated surface are the same as the serrations of the second serrated surface.

The first component may comprise a central core sandwiched between a first region and a second region. The first region may comprise the first serrated surface. The second region may comprise the second serrated surface. The central core may extend unbroken along a length of the first component.

Each serration may comprise a first facet and a second facet. The first facet may have a first angle with respect to a plane of the reflection suppression device. The second facet may have a second angle with respect to the plane of the reflection suppression device. Each of the array of louvres may be at least partially fixed to a first facet of each serration. The second facet of each serration may correspond to the angled surface (described in earlier aspects). Each louvre may not extend into or through the core. Thus, when the first component comprises a first and second serrated surface, the second component may comprise a first array of louvres and a second array of louvres. Each of the louvres of the first array of louvres may be at least partially fixed to a first facet of a serration of the first serrated surface. Each of the louvres of the second array of louvres may be at least partially fixed to a first facet of a serration of the second serrated surface. Thus, the first array of louvres may form a first layer of louvres. The second array of louvres may form a second layer of louvres. The first layer of louvres may be above the second layer of louvres in a direction substantially parallel to the length of the louvres. The first layer of louvres may be separated from the second layer of louvres by the central core of the first component.

The first component may be integrally formed and may be formed as a single component. The first component may consist of a single transparent material (for example, a transparent polymer). Alternatively, the central core layer of the first component may be formed of a first material and the first and second region of the first component may be formed of a second material. Both the first and second material may be transparent but the first material may be different to the second material. For example, the second material may be relatively softer than the first material. Thus, the second material may be easier to shape during manufacture of the first (and second) serrated surfaces. The harder first material may be provide mechanical strength to the first component.

A reflection suppression device, as described above, may advantageously suppress glare and have mechanical strength and rigidity while being suitable for fast and efficient mass production techniques, as discussed above. The reflection suppression device may advantageously be manufactured by the manufacturing methods described in relation to the first and fifth aspects.

Features and advantages described in relation to one aspect may be applicable to other aspects. In particular, the features and advantages described in the first aspect may be applicable to the second to sixth aspects, and vice versa.

In the present disclosure, the term "replica" is merely used to reflect that spatially modulated light is divided such that a complex light field is directed along a plurality of different optical paths. The word "replica" is used to refer to each occurrence or instance of the complex light field after a replication event - such as a partial reflection-transmission by a pupil expander. Each replica travels along a different optical path. Some embodiments of the present disclosure relate to propagation of light that is encoded with a hologram, not an image - i.e., light that is spatially modulated with a hologram of an image, not the image itself. It may therefore be said that a plurality of replicas of the hologram are formed. The person skilled in the art of holography will appreciate that the complex light field associated with propagation of light encoded with a hologram will change with propagation distance. Use herein of the term "replica" is independent of propagation distance and so the two branches or paths of light associated with a replication event are still referred to as "replicas" of each other even if the branches are a different length, such that the complex light field has evolved differently along each path. That is, two complex light fields are still considered "replicas" in accordance with this disclosure even if they are associated with different propagation distances - providing they have arisen from the same replication event or series of replication events.

A "diffracted light field" or "diffractive light field" in accordance with this disclosure is a light field formed by diffraction. A diffracted light field may be formed by illuminating a corresponding diffractive pattern. In accordance with this disclosure, an example of a diffractive pattern is a hologram and an example of a diffracted light field is a holographic light field or a light field forming a holographic reconstruction of an image. The holographic light field forms a (holographic) reconstruction of an image on a replay plane. The holographic light field that propagates from the hologram to the replay plane may be said to comprise light encoded with the hologram or light in the hologram domain. A diffracted light field is characterized by a diffraction angle determined by the smallest feature size of the diffractive structure and the wavelength of the light (of the diffracted light field). In accordance with this disclosure, it may also be said that a "diffracted light field" is a light field that forms a reconstruction on a plane spatially separated from the corresponding diffractive structure. An optical system is disclosed herein for propagating a diffracted light field from a diffractive structure to a viewer. The diffracted light field may form an image.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude and phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to 2π) which represents the amount of phase retardation provided by that pixel. For example, a pixel of the spatial light modulator described as having a phase value of rr/2 will retard the phase of received light by π/2 radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

### BRIEF DESCRIPTION OF THE DRAWINGS

Specific embodiments are described by way of example only with reference to the following figures:
Figure 1 is a schematic showing a reflective SLM producing a holographic reconstruction on a screen;
Figure 2 shows an image for projection comprising eight image areas/components, V1 to V8, and cross-sections of the corresponding hologram channels, H1-H8;
Figure 3 shows a hologram displayed on an LCOS that directs light into a plurality of discrete areas;
Figure 4 shows a system, including a display device that displays a hologram that has been calculated as illustrated in Figures 2 and 3;
Figure 5A shows a perspective view of a first example two-dimensional pupil expander comprising two replicators each comprising pairs of stacked surfaces;
Figure 5B shows a perspective view of a first example two-dimensional pupil expander comprising two replicators each in the form of a solid waveguide;
Figures 6A and 6B are schematic views of an automotive head-up display system showing potential areas of sunlight glare;
Figure 7 is a schematic view of a reflection suppression device formed on a transmission surface of a pupil expander of an automotive head-up display system;
Figure 8 is a schematic view of a portion of the reflection suppression device of Figure 7, showing the refraction of light rays passing through the suppression device;
Figures 9A and 9B show views of a mould used to injection mould a reflection suppression device in accordance with a first example method of manufacture, Figure 9A is a schematic view of a top view of a primary part of the mould and Figure 9B is a schematic cross-sectional view of the mould;
Figures 10A and 10B show cross-sectional schematic views of the injection mould of Figure 9A and 9B during the method of manufacture, Figure 10A showing a first step of the method and Figure 10B showing a second step of the method;
Figure 11A and 11B show a reflection suppression device manufactured according to the first example;
Figures 12A to 12C schematically show at least some of the steps of a second example method of manufacturing a reflection suppression device;
Figures 13A to 13C schematically show at least some of the steps of a third example method of manufacturing a reflection suppression device;
Figures 14A to 14C schematically show at least some of the steps of a fourth example method of manufacturing a reflection suppression device;
Figure 15 schematically shows reflection suppression device manufactured according to a fifth example method of manufacture;
Figures 16A and 16B schematically show at least some of the steps of a sixth example method of manufacturing a reflection suppression device;
Figures 17A schematically shows at least some of the steps of a seventh example method of manufacturing a reflection suppression device;
Figures 18A and 18B schematically show at least some of the steps of an eighth example method of manufacturing a reflection suppression device, Figure 18A showing a cross-section of a mould used in the eighth example; and
Figures 19A to 19C and 20A and 20B schematically show at least some of the steps of a ninth example method of manufacturing a reflection suppression device.

The same reference numbers will be used throughout the drawings to refer to the same or like parts.

### DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike - the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in co-dependent relationship.

In the present disclosure, the term "substantially" when applied to a structural units of an apparatus may be interpreted as the technical feature of the structural units being produced within the technical tolerance of the method used to manufacture it.

### Conventional optical configuration for holographic projection

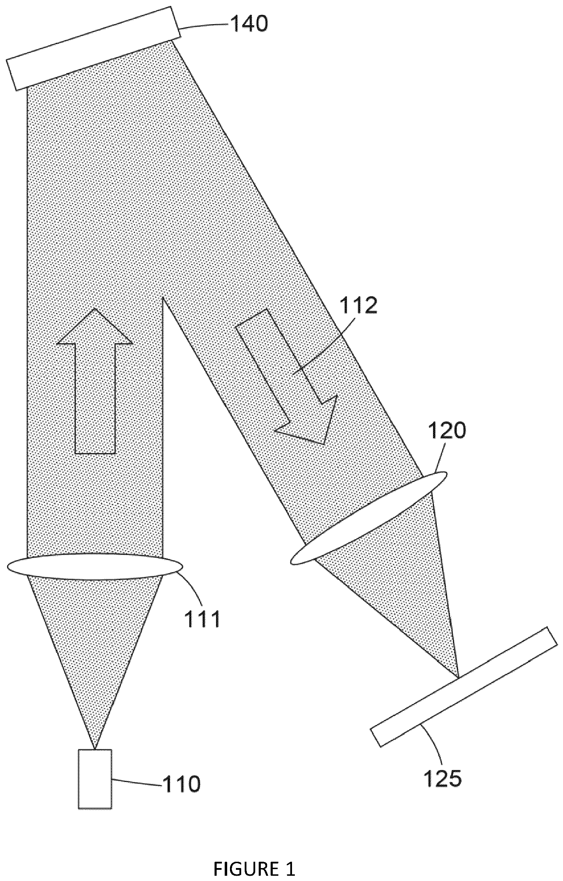

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is *not* a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform In some embodiments of the present disclosure, the lens of the viewer's eye performs the hologram to image transformation.

### Hologram calculation

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms. Embodiments relate to Fourier holography and Gerchberg-Saxton type algorithms by way of example only. The present disclosure is equally applicable to Fresnel holography and Fresnel holograms which may be calculated by a similar method. In some embodiments, the hologram is a phase or phase-only hologram. However, the present disclosure is also applicable to holograms calculated by other techniques such as those based on point cloud methods.

In some embodiments, the hologram engine is arranged to exclude from the hologram calculation the contribution of light blocked by a limiting aperture of the display system. British patent application 2101666.2, filed 5 February 2021 and incorporated herein by reference, discloses a first hologram calculation method in which eye-tracking and ray tracing are used to identify a sub-area of the display device for calculation of a point cloud hologram which eliminates ghost images. The sub-area of the display device corresponds with the aperture, of the present disclosure, and is used exclude light paths from the hologram calculation. British patent application 2112213.0, filed 26 August 2021 and incorporated herein by reference, discloses a second method based on a modified Gerchberg-Saxton type algorithm which includes steps of light field cropping in accordance with pupils of the optical system during hologram calculation. The cropping of the light field corresponds with the determination of a limiting aperture of the present disclosure. British patent application 2118911.3, filed 23 December 2021 and also incorporated herein by reference, discloses a third method of calculating a hologram which includes a step of determining a region of a so-called extended modulator formed by a hologram replicator. The region of the extended modulator is also an aperture in accordance with this disclosure.

In some embodiments, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

### Large field of view and eye-box using small display device

Broadly, the present disclosure relates to image projection. It relates to a method of image projection and an image projector which comprises a display device. The present disclosure also relates to a projection system comprising the image projector and a viewing system, in which the image projector projects or relays light from the display device to the viewing system. The present disclosure is equally applicable to a monocular and binocular viewing system. The viewing system may comprise a viewer's eye or eyes. The viewing system comprises an optical element having optical power (e.g., lens/es of the human eye) and a viewing plane (e.g., retina of the human eye/s). The projector may be referred to as a `light engine'. The display device and the image formed (or perceived) using the display device are spatially separated from one another. The image is formed, or perceived by a viewer, on a display plane. In some embodiments, the image is a virtual image and the display plane may be referred to as a virtual image plane. In other examples, the image is a real image formed by holographic reconstruction and the image is projected or relayed to the viewing plane. In these other examples, spatially modulated light of an intermediate holographic reconstruction formed either in free space or on a screen or other light receiving surface between the display device and the viewer, is propagated to the viewer. In both cases, an image is formed by illuminating a diffractive pattern (e.g., hologram or kinoform) displayed on the display device.

The display device comprises pixels. The pixels of the display may display a diffractive pattern or structure that diffracts light. The diffracted light may form an image at a plane spatially separated from the display device. In accordance with well-understood optics, the magnitude of the maximum diffraction angle is determined by the size of the pixels and other factors such as the wavelength of the light.

In embodiments, the display device is a spatial light modulator such as liquid crystal on silicon ("LCOS") spatial light modulator (SLM). Light propagates over a range of diffraction angles (for example, from zero to the maximum diffractive angle) from the LCOS, towards a viewing entity/system such as a camera or an eye. In some embodiments, magnification techniques may be used to increase the range of available diffraction angles beyond the conventional maximum diffraction angle of an LCOS.

In some embodiments, the (light of a) hologram itself is propagated to the eyes. For example, spatially modulated light of the hologram (that has not yet been fully transformed to a holographic reconstruction, i.e. image) - that may be informally said to be "encoded" with/by the hologram - is propagated directly to the viewer's eyes. A real or virtual image may be perceived by the viewer. In these embodiments, there is no intermediate holographic reconstruction / image formed between the display device and the viewer. It is sometimes said that, in these embodiments, the lens of the eye performs a hologram-to-image conversion or transform. The projection system, or light engine, may be configured so that the viewer effectively looks directly at the display device.

Reference is made herein to a "light field" which is a "complex light field". The term "light field" merely indicates a pattern of light having a finite size in at least two orthogonal spatial directions, e.g. x and y. The word "complex" is used herein merely to indicate that the light at each point in the light field may be defined by an amplitude value and a phase value, and may therefore be represented by a complex number or a pair of values. For the purpose of hologram calculation, the complex light field may be a two-dimensional array of complex numbers, wherein the complex numbers define the light intensity and phase at a plurality of discrete locations within the light field.

In accordance with the principles of well-understood optics, the range of angles of light propagating from a display device that can be viewed, by an eye or other viewing entity/system, varies with the distance between the display device and the viewing entity. At a 1 metre viewing distance, for example, only a small range of angles from an LCOS can propagate through an eye's pupil to form an image at the retina for a given eye position. The range of angles of light rays that are propagated from the display device, which can successfully propagate through an eye's pupil to form an image at the retina for a given eye position, determines the portion of the image that is 'visible' to the viewer. In other words, not all parts of the image are visible from any one point on the viewing plane (e.g., any one eye position within a viewing window such as eye-box.)

In some embodiments, the image perceived by a viewer is a virtual image that appears upstream of the display device - that is, the viewer perceives the image as being further away from them than the display device. Conceptually, it may therefore be considered that the viewer is looking at a virtual image through an 'display device-sized window', which may be very small, for example 1 cm in diameter, at a relatively large distance, e.g., 1 metre. And the user will be viewing the display device-sized window via the pupil(s) of their eye(s), which can also be very small. Accordingly, the field of view becomes small and the specific angular range that can be seen depends heavily on the eye position, at any given time.

A pupil expander addresses the problem of how to increase the range of angles of light rays that are propagated from the display device that can successfully propagate through an eye's pupil to form an image. The display device is generally (in relative terms) small and the projection distance is (in relative terms) large. In some embodiments, the projection distance is at least one - such as, at least two - orders of magnitude greater than the diameter, or width, of the entrance pupil and/or aperture of the display device (i.e., size of the array of pixels).

Use of a pupil expander increases the viewing area (i.e., user's eye-box) laterally, thus enabling some movement of the eye/s to occur, whilst still enabling the user to see the image. As the skilled person will appreciate, in an imaging system, the viewing area (user's eye box) is the area in which a viewer's eyes can perceive the image. The present disclosure encompasses non-infinite virtual image distances - that is, near-field virtual images.

Conventionally, a two-dimensional pupil expander comprises one or more one-dimensional optical waveguides each formed using a pair of opposing reflective surfaces, in which the output light from a surface forms a viewing window or eye-box. Light received from the display device (e.g., spatially modulated light from a LCOS) is replicated by the or each waveguide so as to increase the field of view (or viewing area) in at least one dimension. In particular, the waveguide enlarges the viewing window due to the generation of extra rays or "replicas" by division of amplitude of the incident wavefront.

The display device may have an active or display area having a first dimension that may be less than 10 cms such as less than 5 cms or less than 2 cms. The propagation distance between the display device and viewing system may be greater than 1 m such as greater than 1.5 m or greater than 2 m. The optical propagation distance within the waveguide may be up to 2 m such as up to 1.5 m or up to 1 m. The method may be capable of receiving an image and determining a corresponding hologram of sufficient quality in less than 20 ms such as less than 15 ms or less than 10 ms.

In some embodiments - described only by way of example of a diffracted or holographic light field in accordance with this disclosure - a hologram is configured to route light into a plurality of channels, each channel corresponding to a different part (i.e. sub-area) of an image. The channels formed by the diffractive structure are referred to herein as "hologram channels" merely to reflect that they are channels of light encoded by the hologram with image information. It may be said that the light of each channel is in the hologram domain rather than the image or spatial domain. In some embodiments, the hologram is a Fourier or Fourier transform hologram and the hologram domain is therefore the Fourier or frequency domain. The hologram may equally be a Fresnel or Fresnel transform hologram. The hologram may also be a point cloud hologram. The hologram is described herein as routing light into a plurality of hologram channels to reflect that the image that can be reconstructed from the hologram has a finite size and can be arbitrarily divided into a plurality of image sub-areas, wherein each hologram channel would correspond to each image sub-area. Importantly, the hologram of this example is characterised by how it distributes the image content when illuminated. Specifically and uniquely, the hologram divides the image content by angle. That is, each point on the image is associated with a unique light ray angle in the spatially modulated light formed by the hologram when illuminated - at least, a unique pair of angles because the hologram is two-dimensional. For the avoidance of doubt, this hologram behaviour is not conventional. The spatially modulated light formed by this special type of hologram, when illuminated, may be divided into a plurality of hologram channels, wherein each hologram channel is defined by a range of light ray angles (in two-dimensions). It will be understood from the foregoing that any hologram channel (i.e. sub-range of light ray angles) that may be considered in the spatially modulated light will be associated with a respective part or sub-area of the image. That is, all the information needed to reconstruct that part or sub-area of the image is contained within a sub-range of angles of the spatially modulated light formed from the hologram of the image. When the spatially modulated light is observed as a whole, there is not necessarily any evidence of a plurality of discrete light channels.

Nevertheless, the hologram may still be identified. For example, if only a continuous part or sub-area of the spatially modulated light formed by the hologram is reconstructed, only a sub-area of the image should be visible. If a different, continuous part or sub-area of the spatially modulated light is reconstructed, a different sub-area of the image should be visible. A further identifying feature of this type of hologram is that the shape of the cross-sectional area of any hologram channel substantially corresponds to (i.e. is substantially the same as) the shape of the entrance pupil although the size may be different - at least, at the correct plane for which the hologram was calculated. Each light / hologram channel propagates from the hologram at a different angle or range of angles. Whilst these are example ways of characterising or identifying this type of hologram, other ways may be used. In summary, the hologram disclosed herein is characterised and identifiable by how the image content is distributed within light encoded by the hologram. Again, for the avoidance of any doubt, reference herein to a hologram configured to direct light or angularly-divide an image into a plurality of hologram channels is made by way of example only and the present disclosure is equally applicable to pupil expansion of any type of holographic light field or even any type of diffractive or diffracted light field.

The system can be provided in a compact and streamlined physical form. This enables the system to be suitable for a broad range of real-world applications, including those for which space is limited and real-estate value is high. For example, it may be implemented in a head-up display (HUD) such as a vehicle or automotive HUD.

In accordance with the present disclosure, pupil expansion is provided for diffracted or diffractive light, which may comprise diverging ray bundles. The diffracted light field may be defined by a "light cone". Thus, the size of the diffracted light field (as defined on a two-dimensional plane) increases with propagation distance from the corresponding diffractive structure (i.e. display device). It can be said that the pupil expander/s replicate the hologram or form at least one replica of the hologram, to convey that the light delivered to the viewer is spatially modulated in accordance with a hologram.

In some embodiments, two one-dimensional waveguide pupil expanders are provided, each one-dimensional waveguide pupil expander being arranged to effectively increase the size of the exit pupil of the system by forming a plurality of replicas or copies of the exit pupil (or light of the exit pupil) of the spatial light modulator. The exit pupil may be understood to be the physical area from which light is output by the system. It may also be said that each waveguide pupil expander is arranged to expand the size of the exit pupil of the system. It may also be said that each waveguide pupil expander is arranged to expand/increase the size of the eye box within which a viewer's eye can be located, in order to see/receive light that is output by the system.

### Light channelling

The hologram formed in accordance with some embodiments, angularly-divides the image content to provide a plurality of hologram channels which may have a cross-sectional shape defined by an aperture of the optical system. The hologram is calculated to provide this channelling of the diffracted light field. In some embodiments, this is achieved during hologram calculation by considering an aperture (virtual or real) of the optical system, as described above.

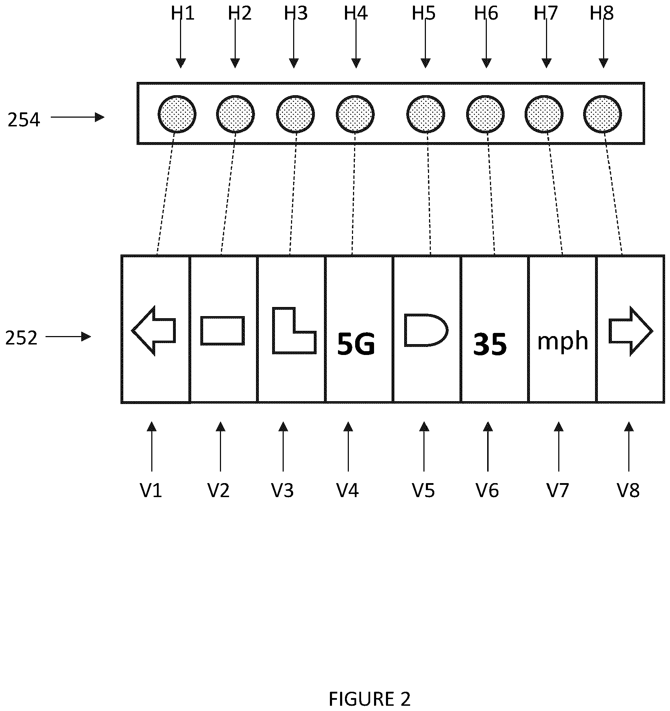

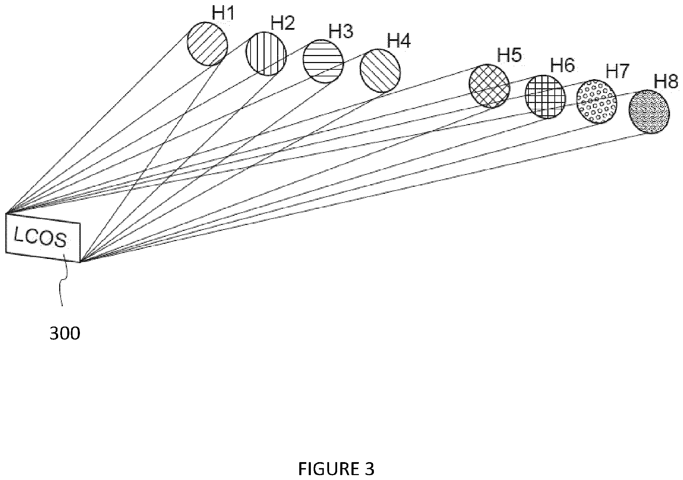

Figures 2 and 3 show an example of this type of hologram that may be used in conjunction with a pupil expander as disclosed herein. However, this example should not be regarded as limiting with respect to the present disclosure.

Figure 2 shows an image 252 for projection comprising eight image areas/components, V1 to V8. Figure 2 shows eight image components by way of example only and the image 252 may be divided into any number of components. Figure 2 also shows an encoded light pattern 254 (i.e., hologram) that can reconstruct the image 252 - e.g., when transformed by the lens of a suitable viewing system. The encoded light pattern 254 comprises first to eighth sub-holograms or components, H1 to H8, corresponding to the first to eighth image components/areas, V1 to V8. Figure 2 further shows how a hologram may decompose the image content by angle. The hologram may therefore be characterised by the channelling of light that it performs. This is illustrated in Figure 3. Specifically, the hologram in this example directs light into a plurality of discrete areas. The discrete areas are discs in the example shown but other shapes are envisaged. The size and shape of the optimum disc may, after propagation through the waveguide, be related to the size and shape of an aperture of the optical system such as the entrance pupil of the viewing system.

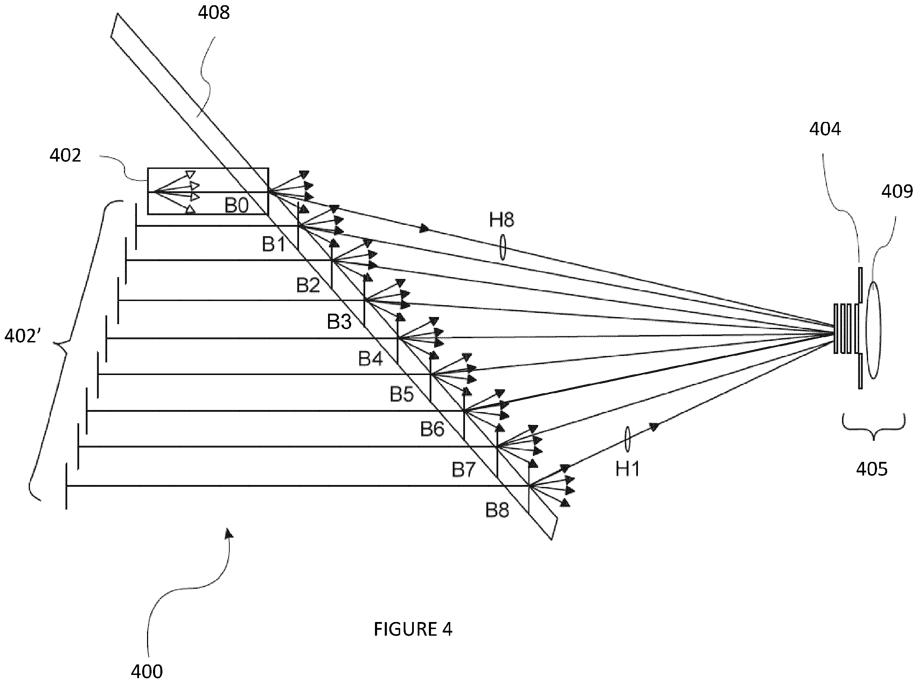

Figure 4 shows a system 400, including a display device that displays a hologram that has been calculated as illustrated in Figures 2 and 3.

The system 400 comprises a display device, which in this arrangement comprises an LCOS 402. The LCOS 402 is arranged to display a modulation pattern (or `diffractive pattern') comprising the hologram and to project light that has been holographically encoded towards an eye 405 that comprises a pupil that acts as an aperture 404, a lens 409, and a retina (not shown) that acts as a viewing plane. There is a light source (not shown) arranged to illuminate the LCOS 402. The lens 409 of the eye 405 performs a hologram-to-image transformation. The light source may be of any suitable type. For example, it may comprise a laser light source.

The viewing system 400 further comprises a waveguide 408 positioned between the LCOS 402 and the eye 405. The presence of the waveguide 408 enables all angular content from the LCOS 402 to be received by the eye, even at the relatively large projection distance shown. This is because the waveguide 508 acts as a pupil expander, in a manner that is well known and so is described only briefly herein.

In brief, the waveguide 408 shown in Figure 4 comprises a substantially elongate formation. In this example, the waveguide 408 comprises an optical slab of refractive material, but other types of waveguide are also well known and may be used. The waveguide 408 is located so as to intersect the light cone (i.e., the diffracted light field) that is projected from the LCOS 402, for example at an oblique angle. In this example, the size, location, and position of the waveguide 408 are configured to ensure that light from each of the eight ray bundles, within the light cone, enters the waveguide 408. Light from the light cone enters the waveguide 408 via its first planar surface (located nearest the LCOS 402) and is guided at least partially along the length of the waveguide 408, before being emitted via its second planar surface, substantially opposite the first surface (located nearest the eye). As will be well understood, the second planar surface is partially reflective, partially transmissive. In other words, when each ray of light travels within the waveguide 408 from the first planar surface and hits the second planar surface, some of the light will be transmitted out of the waveguide 408 and some will be reflected by the second planar surface, back towards the first planar surface. The first planar surface is reflective, such that all light that hits it, from within the waveguide 408, will be reflected back towards the second planar surface. Therefore, some of the light may simply be refracted between the two planar surfaces of the waveguide 408 before being transmitted, whilst other light may be reflected, and thus may undergo one or more reflections, (or 'bounces') between the planar surfaces of the waveguide 408, before being transmitted.

Figure 4 shows a total of nine "bounce" points, B0 to B8, along the length of the waveguide 408. Although light relating to all points of the image (V1-V8) as shown in Figure 2 is transmitted out of the waveguide at each "bounce" from the second planar surface of the waveguide 408, only the light from one angular part of the image (e.g. light of one of V1 to V8) has a trajectory that enables it to reach the eye 405, from each respective "bounce" point, B0 to B8. Moreover, light from a different angular part of the image, V1 to V8, reaches the eye 405 from each respective "bounce" point. Therefore, each angular channel of encoded light reaches the eye only once, from the waveguide 408, in the example of Figure 4.

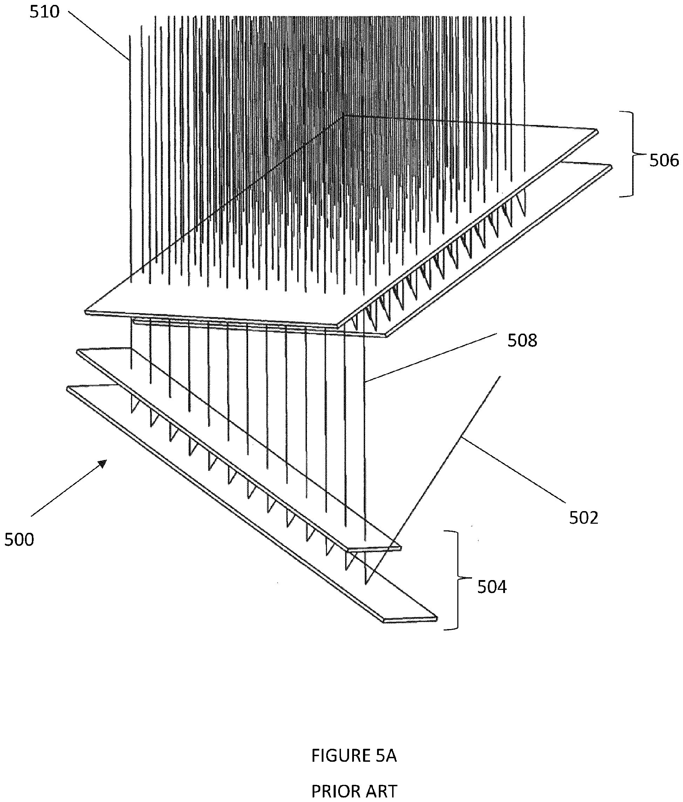

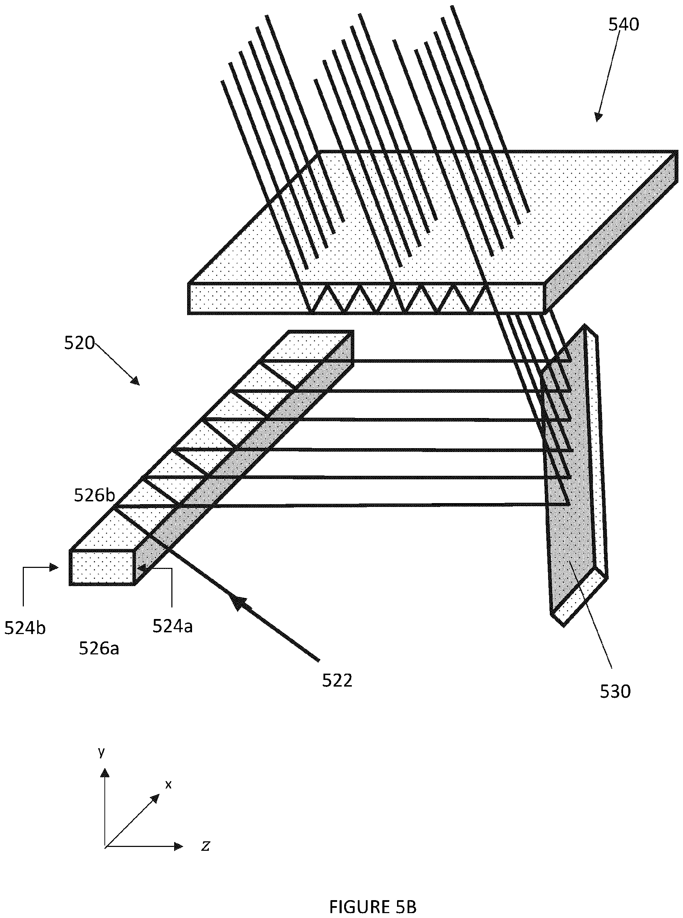

The waveguide 408 forms a plurality of replicas of the hologram, at the respective "bounce" points B1 to B8 along its length, corresponding to the direction of pupil expansion. As shown in Figure 5, the plurality of replicas may be extrapolated back, in a straight line, to a corresponding plurality of replica or virtual display devices 402'. This process corresponds to the step of "unfolding" an optical path within the waveguide, so that a light ray of a replica is extrapolated back to a "virtual surface" without internal reflection within the waveguide. Thus, the light of the expanded exit pupil may be considered to originate from a virtual surface (also called an "extended modulator" herein) comprising the display device 402 and the replica display devices 402'.

Although virtual images, which require the eye to transform received modulated light in order to form a perceived image, have generally been discussed herein, the methods and arrangements described herein can be applied to real images.

### Two-Dimensional Pupil Expansion

Whilst the arrangement shown in Figure 4 includes a single waveguide that provides pupil expansion in one dimension, pupil expansion can be provided in more than one dimension, for example in two dimensions. Moreover, whilst the example in Figure 4 uses a hologram that has been calculated to create channels of light, each corresponding to a different portion of an image, the present disclosure and the systems that are described herebelow are not limited to such a hologram type.

Figure 5A shows a perspective view of a system 500 comprising two replicators, 504, 506 arranged for expanding a light beam 502 in two dimensions.

In the system 500 of Figure 5A, the first replicator 504 comprises a first pair of surfaces, stacked parallel to one another, and arranged to provide replication - or, pupil expansion - in a similar manner to the waveguide 408 of Figure 4. The first pair of surfaces are similarly (in some cases, identically) sized and shaped to one another and are substantially elongate in one direction. The collimated light beam 502 is directed towards an input on the first replicator 504. Due to a process of internal reflection between the two surfaces, and partial transmission of light from each of a plurality of output points on one of the surfaces (the upper surface, as shown in Figure 5A), which will be familiar to the skilled reader, light of the light beam 502 is replicated in a first direction, along the length of the first replicator 504. Thus, a first plurality of replica light beams 508 is emitted from the first replicator 504, towards the second replicator 506.

The second replicator 506 comprises a second pair of surfaces stacked parallel to one another, arranged to receive each of the collimated light beams of the first plurality of light beams 508 and further arranged to provide replication - or, pupil expansion - by expanding each of those light beams in a second direction, substantially orthogonal to the first direction. The first pair of surfaces are similarly (in some cases, identically) sized and shaped to one another and are substantially rectangular. The rectangular shape is implemented for the second replicator in order for it to have length along the first direction, in order to receive the first plurality of light beams 508, and to have length along the second, orthogonal direction, in order to provide replication in that second direction. Due to a process of internal reflection between the two surfaces, and partial transmission of light from each of a plurality of output points on one of the surfaces (the upper surface, as shown in Figure 5A), light of each light beam within the first plurality of light beams 508 is replicated in the second direction. Thus, a second plurality of light beams 510 is emitted from the second replicator 506, wherein the second plurality of light beams 510 comprises replicas of the input light beam 502 along each of the first direction and the second direction. Thus, the second plurality of light beams 510 may be regarded as comprising a two-dimensional grid, or array, of replica light beams.

Thus, it can be said that the first and second replicators 504, 505 of Figure 5A combine to provide a two-dimensional replicator (or, "two-dimensional pupil expander"). Thus, the replica light beams 510 may be emitted along an optical path to an expanded eye-box of a display system, such as a head-up display.

In the system of Figure 5A, the first replicator 504 is a waveguide comprising a pair of elongate rectilinear reflective surfaces, stacked parallel to one another, and, similarly, the second replicator 504 is a waveguide comprising a pair of rectangular reflective surfaces, stacked parallel to one another. In other systems, the first replicator may be a solid elongate rectilinear waveguide and the second replicator may be a solid planar rectangular shaped waveguide, wherein each waveguide comprises an optically transparent solid material such as glass. In this case, the pair of parallel reflective surfaces are formed by a pair of opposed major sidewalls optionally comprising respective reflective and reflective-transmissive surface coatings, familiar to the skilled reader.

Figure 5B shows a perspective view of a system 500 comprising two replicators, 520, 540 arranged for replicating a light beam 522 in two dimensions, in which the first replicator is a solid elongated waveguide 520 and the second replicator is a solid planar waveguide 540.

In the system of Figure 5B, the first replicator/waveguide 520 is arranged so that its pair of elongate parallel reflective surfaces 524a, 524b are perpendicular to the plane of the second replicator/ waveguide 540. Accordingly, the system comprises an optical coupler arranged to couple light from an output port of first replicator 520 into an input port of the second replicator 540. In the illustrated arrangement, the optical coupler is a planar/fold mirror 530 arranged to fold or turn the optical path of light to achieve the required optical coupling from the first replicator to the second replicator. As shown in Figure 5B, the mirror 530 is arranged to receive light - comprising a one-dimensional array of replicas extending in the first dimension - from the output port / reflective-transmissive surface 524a of the first replicator/waveguide 520. The mirror 530 is tilted so as to redirect the received light onto an optical path to an input port in the (fully) reflective surface of second replicator 540 at an angle to provide waveguiding and replica formation, along its length in the second dimension. It will be appreciated that the mirror 530 is one example of an optical element that can redirect the light in the manner shown, and that one or more other elements may be used instead, to perform this task.

In the illustrated arrangement, the (partially) reflective-transmissive surface 524a of the first replicator 520 is adjacent the input port of the first replicator/waveguide 520 that receives input beam 522 at an angle to provide waveguiding and replica formation, along its length in the first dimension. Thus, the input port of first replicator/waveguide 520 is positioned at an input end thereof at the same surface as the reflective-transmissive surface 524a. The skilled reader will understand that the input port of the first replicator/waveguide 520 may be at any other suitable position.

Accordingly, the arrangement of Figure 5B enables the first replicator 520 and the mirror 530 to be provided as part of a first relatively thin layer in a plane in the first and third dimensions (illustrated as an x-z plane). In particular, the size or "height" of a first planar layer - in which the first replicator 520 is located - in the second dimension (illustrated as the y dimension) is reduced. The mirror 530 is configured to direct the light away from a first layer/plane, in which the first replicator 520 is located (i.e. the "first planar layer"), and direct it towards a second layer/plane, located above and substantially parallel to the first layer/plane, in which the second replicator 540 is located (i.e. a "second planar layer"). Thus, the overall size or "height" of the system - comprising the first and second replicators 520, 540 and the mirror 530 located in the stacked first and second planar layers in the first and third dimensions (illustrated as an x-z plane) - in the second dimension (illustrated as the y dimension) is compact. The skilled reader will understand that many variations of the arrangement of Figure 5B for implementing the present disclosure are possible and contemplated.

The image projector may be arranged to project a diverging or diffracted light field. In some embodiments, the light field is encoded with a hologram. In some embodiments, the diffracted light field comprises diverging ray bundles. In some embodiments, the image formed by the diffracted light field is a virtual image.

In some embodiments, the first pair of parallel / complementary surfaces are elongate or elongated surfaces, being relatively long along a first dimension and relatively short along a second dimension, for example being relatively short along each of two other dimensions, with each dimension being substantially orthogonal to each of the respective others. The process of reflection/transmission of the light between/from the first pair of parallel surfaces is arranged to cause the light to propagate within the first waveguide pupil expander, with the general direction of light propagation being in the direction along which the first waveguide pupil expander is relatively long (i.e., in its "elongate" direction).

There is disclosed herein a system that forms an image using diffracted light and provides an eye-box size and field of view suitable for real-world application - e.g. in the automotive industry by way of a head-up display. The diffracted light is light forming a holographic reconstruction of the image from a diffractive structure - e.g. hologram such as a Fourier or Fresnel hologram. The use diffraction and a diffractive structure necessitates a display device with a high density of very small pixels (e.g. 1 micrometer) - which, in practice, means a small display device (e.g. 1 cm). The inventors have addressed a problem of how to provide 2D pupil expansion with a diffracted light field e.g. diffracted light comprising diverging (not collimated) ray bundles.

In some embodiments, the display system comprises a display device - such as a pixelated display device, for example a spatial light modulator (SLM) or Liquid Crystal on Silicon (LCoS) SLM - which is arranged to provide or form the diffracted or diverging light. In such aspects, the aperture of the spatial light modulator (SLM) is a limiting aperture of the system. That is, the aperture of the spatial light modulator - more specifically, the size of the area delimiting the array of light modulating pixels comprised within the SLM - determines the size (e.g. spatial extent) of the light ray bundle that can exit the system. In accordance with this disclosure, it is stated that the exit pupil of the system is expanded to reflect that the exit pupil of the system (that is limited by the small display device having a pixel size for light diffraction) is made larger or bigger or greater in spatial extend by the use of at least one pupil expander.

The diffracted or diverging light field may be said to have "a light field size", defined in a direction substantially orthogonal to a propagation direction of the light field. Because the light is diffracted / diverging, the light field size increases with propagation distance.

In some embodiments, the diffracted light field is spatially-modulated in accordance with a hologram. In other words, in such aspects, the diffractive light field comprises a "holographic light field". The hologram may be displayed on a pixelated display device. The hologram may be a computer-generated hologram (CGH). It may be a Fourier hologram or a Fresnel hologram or a point-cloud hologram or any other suitable type of hologram. The hologram may, optionally, be calculated so as to form channels of hologram light, with each channel corresponding to a different respective portion of an image that is intended to be viewed (or perceived, if it is a virtual image) by the viewer. The pixelated display device may be configured to display a plurality of different holograms, in succession or in sequence. Each of the aspects and embodiments disclosed herein may be applied to the display of multiple holograms.

The output port of the first waveguide pupil expander may be coupled to an input port of a second waveguide pupil expander. The second waveguide pupil expander may be arranged to guide the diffracted light field - including some of, preferably most of, preferably all of, the replicas of the light field that are output by the first waveguide pupil expander - from its input port to a respective output port by internal reflection between a third pair of parallel surfaces of the second waveguide pupil expander.

The first waveguide pupil expander may be arranged to provide pupil expansion, or replication, in a first direction and the second waveguide pupil expander may be arranged to provide pupil expansion, or replication, in a second, different direction. The second direction may be substantially orthogonal to the first direction. The second waveguide pupil expander may be arranged to preserve the pupil expansion that the first waveguide pupil expander has provided in the first direction and to expand (or, replicate) some of, preferably most of, preferably all of, the replicas that it receives from the first waveguide pupil expander in the second, different direction. The second waveguide pupil expander may be arranged to receive the light field directly or indirectly from the first waveguide pupil expander. One or more other elements may be provided along the propagation path of the light field between the first and second waveguide pupil expanders.

The first waveguide pupil expander may be substantially elongated and the second waveguide pupil expander may be substantially planar. The elongated shape of the first waveguide pupil expander may be defined by a length along a first dimension. The planar, or rectangular, shape of the second waveguide pupil expander may be defined by a length along a first dimension and a width, or breadth, along a second dimension substantially orthogonal to the first dimension. A size, or length, of the first waveguide pupil expander along its first dimension make correspond to the length or width of the second waveguide pupil expander along its first or second dimension, respectively. A first surface of the pair of parallel surfaces of the second waveguide pupil expander, which comprises its input port, may be shaped, sized, and/or located so as to correspond to an area defined by the output port on the first surface of the pair of parallel surfaces on the first waveguide pupil expander, such that the second waveguide pupil expander is arranged to receive each of the replicas output by the first waveguide pupil expander.

The first and second waveguide pupil expander may collectively provide pupil expansion in a first direction and in a second direction perpendicular to the first direction, optionally, wherein a plane containing the first and second directions is substantially parallel to a plane of the second waveguide pupil expander. In other words, the first and second dimensions that respectively define the length and breadth of the second waveguide pupil expander may be parallel to the first and second directions, respectively, (or to the second and first directions, respectively) in which the waveguide pupil expanders provide pupil expansion. The combination of the first waveguide pupil expander and the second waveguide pupil expander may be generally referred to as being a "pupil expander".

It may be said that the expansion/replication provided by the first and second waveguide expanders has the effect of expanding an exit pupil of the display system in each of two directions. An area defined by the expanded exit pupil may, in turn define an expanded eye-box area, from which the viewer can receive light of the input diffracted or diverging light field. The eye-box area may be said to be located on, or to define, a viewing plane.

The two directions in which the exit pupil is expanded may be coplanar with, or parallel to, the first and second directions in which the first and second waveguide pupil expanders provide replication/expansion. Alternatively, in arrangements that comprise other elements such as an optical combiner, for example the windscreen (or, windshield) of a vehicle, the exit pupil may be regarded as being an exit pupil from that other element, such as from the windscreen. In such arrangements, the exit pupil may be non-coplanar and non-parallel with the first and second directions in which the first and second waveguide pupil expanders provide replication/expansion. For example, the exit pupil may be substantially perpendicular to the first and second directions in which the first and second waveguide pupil expanders provide replication/expansion.

The viewing plane, and/or the eye-box area, may be non-coplanar or non-parallel to the first and second directions in which the first and second waveguide pupil expanders provide replication/expansion. For example, a viewing plane may be substantially perpendicular to the first and second directions in which the first and second waveguide pupil expanders provide replication/expansion.

In order to provide suitable launch conditions to achieve internal reflection within the first and second waveguide pupil expanders, an elongate dimension of the first waveguide pupil expander may be tilted relative to the first and second dimensions of the second waveguide pupil expander.

### Combiner shape compensation

An advantage of projecting a hologram to the eye-box is that optical compensation can be encoded in the hologram (see, for example, European patent 2936252 incorporated herein by herein). The present disclosure is compatible with holograms that compensate for the complex curvature of an optical combiner used as part of the projection system. In some embodiments, the optical combiner is the windscreen of a vehicle. Full details of this approach are provided in European patent 2936252 and are not repeated here because the detailed features of those systems and methods are not essential to the new teaching of this disclosure herein and are merely exemplary of configurations that benefit from the teachings of the present disclosure.

### Control device

The present disclosure is also compatible with optical configurations that include a control device (e.g. light shuttering device) to control the delivery of light from a light channelling hologram to the viewer. The holographic projector may further comprise a control device arranged to control the delivery of angular channels to the eye-box position. British patent application 2108456.1, filed 14 June 2021 and incorporated herein by reference, discloses the at least one waveguide pupil expander and control device. The reader will understand from at least this prior disclosure that the optical configuration of the control device is fundamentally based upon the eye-box position of the user and is compatible with any hologram calculation method that achieves the light channeling described herein. It may be said that the control device is a light shuttering or aperturing device. The light shuttering device may comprise a 1D array of apertures or windows, wherein each aperture or window independently switchable between a light transmissive and a light non-transmissive state in order to control the delivery of hologram light channels, and their replicas, to the eye-box. Each aperture or window may comprise a plurality of liquid crystal cells or pixels.

### Reflection Suppression to Mitigate Glare

In operation, the transmission/exit surface (i.e. expanded exit pupil) of the second replicator 506 of the two-dimensional pupil expander of Figure 5 forms an external surface or "output port" from which image light is transmitted through air to an eye-box area for viewing. Accordingly, the transmission surface may be exposed to sunlight from the environment in which the head-up display is used. Received sunlight may cause glare to the viewer, in particular due to reflections of sunlight associated with the pupil expander 506 and/or a turning film, if used in conjunction with the pupil expander 506. For example, glare may arise if rays of sunlight are directly reflected from the external transmission surface, or other surfaces of the pupil expander 506, at angles such that rays of sunlight follow an optical path *directly* to the viewing area/eye-box. This is described herein as "direct glare". In another example, glare may arise if sunlight is coupled into the pupil expander 506 at angles such that rays of sunlight follow the same optical path within the pupil expander as rays of image light, or are otherwise reflected by surfaces thereof, in order to reach the viewing area/eye-box *indirectly* (e.g. via an optical combiner, such as a vehicle windscreen). This is described herein as "veiling glare".

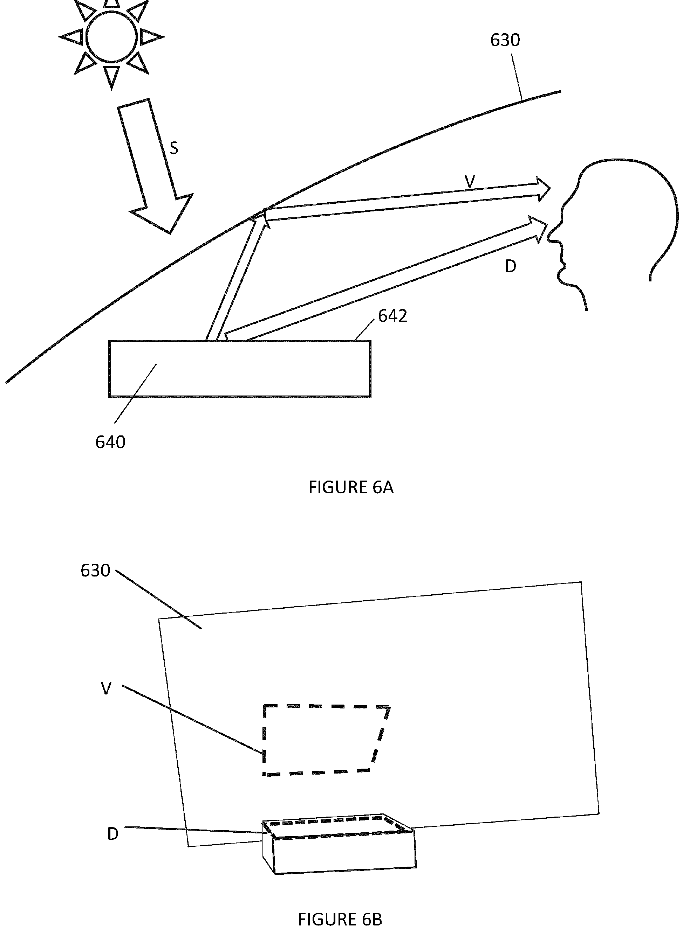

Figure 6A shows the optical path of rays of sunlight S incident on the transmission/exit surface 642 of a (bulk optic) waveguide pupil expander 640 of a head-up display (HUD) in an automotive application. In particular, sunlight S at a relatively high elevation angle to the horizon is incident through a vehicle windscreen 630 onto the external transmission/exit surface 642 of the pupil expander 640. In the example, the transmission/exit surface 642 is located in a substantially horizontal plane in an aperture in the vehicle dashboard (not shown). Some sunlight rays D may be *directly* reflected from the pupil expander 640 (e.g. by one or more reflective layers thereof) towards the viewing area/eye-box and cause "direct glare". Some other light rays V may be *indirectly* reflected from the pupil expander 640 (e.g. by one or more reflective layers thereof) towards the viewing area/eye box, via the windscreen 730 and cause "veiling glare". Thus, light rays V may follow the same optical path(s) as image light output from the pupil expander 640. In either case, the glare arising from reflected sunlight may be harmful to the viewer/driver. Figure 6B shows the view at the viewing area/eye-box indicating the areas of the windscreen and dashboard, from which the viewer/driver may receive sunlight glare. An area of direct glare D is seen at the exit/ transmission surface in the vehicle dashboard (not shown) and an area of viewing glare V is seen at the vehicle windscreen. The skilled person will appreciate that the presence of glare from different positions within the illustrated areas D and V at a particular point in time may depend on the elevation angle of the sun and the configuration of the display system (both internally and *in situ).*

### Reflection Suppression Device

Accordingly, there is a reflection suppression device to be position over the transmission surface of the second replicator/pupil expander, or more generally the output port of the HUD or any other optical component comprising a reflective surface, to reduce the risk of glare to the viewer. The reflection suppression device comprises a louvre structure comprising a plurality of parallel louvres comprising a light absorbing material. The orientation (e.g. the side-wall angle(s), pitch and geometry (e.g. length, width and thickness)) of the louvres is chosen to allow image light to be transmitted from the HUD at the desired range of angles necessary to reach the viewing area/eye-box. The inventors have recognized that an array of louvres, typically in the form of longitudinal rectangular-shaped louvre slats, may be used to control the direction and/or supress reflections of sunlight that may be incident on the transmission surface/output port of the HUD due to its upwardly facing/horizontal orientation in a vehicle dashboard adjacent the vehicle windscreen. The reflection suppression device further comprises a transparent support structure configured to provide mechanical strength and rigidity to the reflection suppression device. In particular, the support structure may be configured to substantially prevent deformation of the array louvres which would otherwise cause the louvres to deviate from the desired angle. The inventors have identified that one problem with the inclusion of the transparent structure is that sunlight (or other unwanted light) may be reflected by a surface of the transparent support structure. So, the transparent structure may introduce another source of glare into the optical system. The transparent support structure can be shaped so as to form a serrated top (or external) surface, the serrations of the serrated surface being co-ordinated with the louvres. Each of the serrations forms an angled surface. The angle of the angled surface is chosen so that light that is reflected by the angled top surface in such a way that the reflected light is not relayed to the eye-box. Thus, the serrated surface of the transparent structure acts to suppress glare as well as to improve mechanical stability.

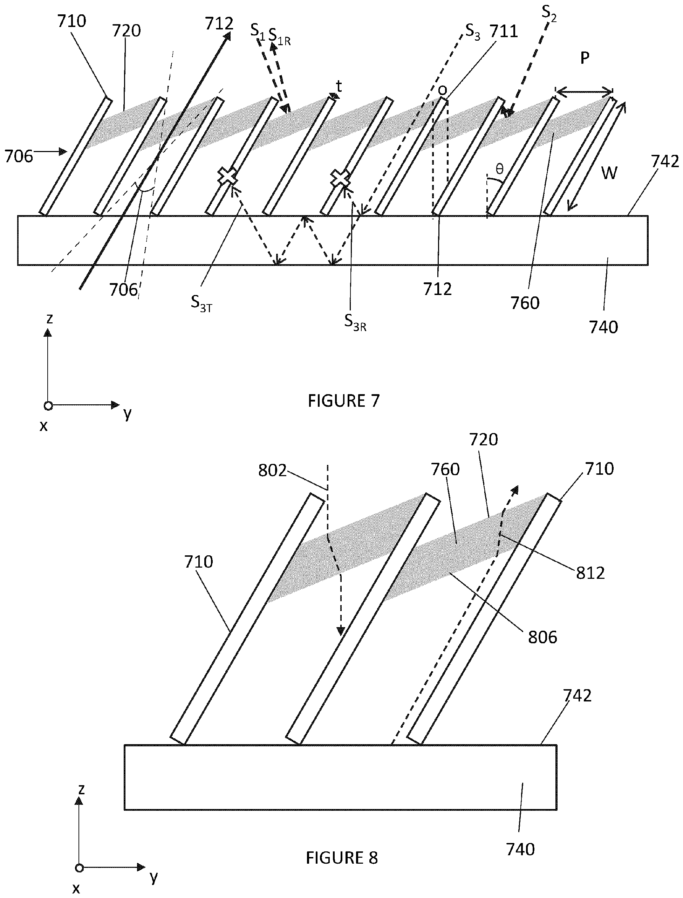

Figure 7 shows an example of a reflection suppression device. The reflection suppression device comprises a light control layer in the form of louvre structure 706 for reducing glare due to reflected sunlight in accordance with reflection suppression devices of the present invention. The louvre structure 706 comprises a plurality of parallel louvres/louvre slats 710. Each louvres 710 has a length extending in the x direction. Thus, the length (long dimension) of the louvres/louvre slats 710 is parallel to a first dimension (illustrated as the x dimension). Each louvre is angled with respect to the z axis (in other words, is angled with respect to the normal of a plane defined by the x and y axis). The louvre slats 710 comprise a light absorbing or light attenuating (e.g. light diffusing) material in order to block light rays incident thereon. In the illustrated arrangement, the louvre structure 706 is disposed on a substantially planar transmission surface 742 forming the output port of a second replicator/waveguide pupil expander 740, which is arranged to internally reflect and replicate image light to provide pupil expansion in the second dimension. However, in other embodiments, the transmission surface 742 could be replaced with a reflective surface of any other optical component.

Light rays of the image light are formed and output by the waveguide 740 at the transmission surface 742. A single ray of image light 712 is shown in Figure 7. However, it should be clear that rays of image light will be output along the waveguide pupil expander 740 in the y direction. Each ray of image light will be parallel and so emitted at the same angle as 712. The louvre slats are inclined at angle θ (as shown in Figure 7). Angle θ is defined as the angle with respect to the normal of the transmission surface (i.e. the angle with respect to the z axis in Figure 7). Angle θ is chosen to be equal to the angle of the image light 712. The angled orientation of the louvre slats 710 enables the light rays of the replicas of the image light 712 to pass between the louvre slats 710 without deviation from the required optical path/s via the windscreen to the viewing area/eye-box. The louvres are configured with an orientation, pitch and geometry arranged to limit the range of transmission angles 708 from the second (top/external) surface, as shown by dashed lines. So, while image light 712 is shown being parallel to the louvres 710, in actual fact all light having an angle falling with range of angles 708 may pass through the reflection suppression structure without deviation and be received at an eye-box.

In this example, the width of the louvres 710 and the pitch p between adjacent louvres 710 and / or the orientation angle θ of the louvres 710 are selected such that there is an overlap (or overhang) between adjacent louvres (in the y dimension). In particular, the distal end/edge 711 - the end that is remote/distal with respect to the transmission surface 742 - of one louvre overlaps (or overhangs) the proximal end/edge 712 of the adjacent / neighbouring louvre in the second dimension, as shown by overlap o. It may be said that the proximal end/edge 712 of one or a pair of neighbouring louvres/louvre slats 710 is in the shadow of the overlap (or overhang) o of the distal end/edge 711 of the other of the pair of neighbouring louvres/louvre slats 710.

The reflection suppression device further comprises a transparent support structure. In this example, the transparent support structure comprises a plurality of transparent elements 760 made of a transparent material such as glass or a transparent polymer material. In this example, the transparent material has a refractive index of greater than 1. Each of the transparent elements 760 are provided between adjacent louvres 710. Each transparent element 760 is in contact with a first louvre 710 at a first end and in contact with a second louvre 710 at a second end. In some examples, the transparent element 760 is fixed such as glued to each of the first and second louvres. A top surface 720 of each of the transparent elements is angled with respect to the transmission surface 742 (i.e. is angled with respect to the normal of a plane defined by the x and y axis). The top surface 720 of each of the transparent elements 760 forms a serrated surface, with each top surface 720 forming one of the serrations such that the serrated surface comprises an array of serrations. In this embodiment, the serrations are uniformly spaced and are aligned with the louvres. Thus, it may be said that the periodicity of the serrations is substantially equal to the periodicity of the array of louvres.

The reflection suppression device of Figure 7 is configured to prevent sunlight glare to a viewer at the viewing area/eye-box from various angles of elevation and as a result of passing through various routes within the reflection suppression device.

Figure 7 shows a ray of sunlight S₁ from the sun at a first elevation angle (with respect to the horizon) and incident on the louvre structure 706. Some of these rays (not shown) of sunlight S₁ may be incident directly on the louvre slats 710 where the light is absorbed or attenuated without reaching the transmission surface 742. In addition, some of these rays (shown) of sunlight S₁ may be incident on the transparent elements 760 between the louvre slats 710 as shown. Owing to the serrated configuration and orientation of the transparent structures 760, these rays of sunlight S₁ may be specularly reflected by one or more surfaces of the transparent structure 760. Because of the angled top surface of the serrated transparent surface, the reflected rays of sunlight S_{1R} are directed on an optical path away from the viewing area/eye-box as shown by the arrow. In particular, S_{1R} is reflected in such a way as to fall outside of the range of angles 706.

Figure 7 further shows a ray of sunlight S₂ from the sun at a second elevation angle, which is higher/greater than the first elevation angle and incident on the louvre structure 706. Owing to the configuration and orientation of the transparent structures 760, the rays of sunlight S₂ may be specularly reflected by one or more surfaces of the transparent structure 760 in a direction onto one of the louvres 710, and thus absorbed or attenuated. This blocks/reduces the intensity of reflected rays of sunlight S_{2R} which may be directed towards the viewing area/eye-box as shown by the arrow. However, rays of sunlight S₂ that are incident on, and transmitted through, the transparent structures 760 may reach the transmission surface 742.

Figure 7 further shows ray of sunlight S₃ from the sun at a third elevation angle which is different to the first and second angles of elevation. In this scenario, sunlight S₃ is received at an angle that enables the light rays to pass between the louvres/louvre slats 710 (e.g. parallel to the sidewalls of the louvre slats 710) and to be (directly) incident on the transmission surface 742 of the waveguide pupil expander 740 (after being transmitted through a transparent element 760. In this scenario, a proportion of the incident sunlight S₃ may be specularly reflected from the transmission surface 742 as reflected rays S_{3R}. However, due to the parameters of the louvre structure 706, as described herein, the reflected rays S_{3R} are specularly reflected along an optical path that is blocked by a louvre/louvre slat 710, and thus absorbed or attenuated as shown by cross X. Furthermore, the remaining proportion of incident sunlight S₃ may be transmitted through the transmission surface 742 into the waveguide pupil expander 740. In this case, as shown in Figure 7, the light rays may be internally reflected between the opposed reflective surfaces of the waveguide 740 as shown by arrows (from right to left - the opposite direction to the direction of pupil expansion). At each internal reflection/bounce at the partially reflective-partially transmissive surface 742, some light rays are emitted from the transmission surface 742 as transmitted rays S_{3T}. However, once again, the transmitted rays S_{3T} are emitted from the transmission surface 742 along an optical path that is blocked by a louvre/louvre slat 710, and thus also absorbed or attenuated as shown by cross X. The overlap o of the louvres described above may ensure that the sunlight cannot escape being absorbed by the louvres 710 (whether that be after transmission or reflection).

Accordingly, the optical path of rays of sunlight incident on the reflection suppression device comprising the louvre structure and the transparent support structure, at substantially all angles of elevation of the sun follow an optical path that is blocked, and thus absorbed or attenuated, by at least one of the louvres/louvre slats 710. Thus, the risk of sunlight being reflected towards the viewing area/eye-box and causing glare is reduced/mitigated. This is achieved while the transparent support structure also provides mechanical strength and stability to the reflection suppression device.

For simplicity, refraction effects (particularly, refraction caused when light is transmitted through the transparent support structure) have not shown in Figure 7. However, because, in this example, the transparent support structure comprises transparent elements 760 formed of a transparent material having a refractive index of greater than 1, light will be refracted as it passes from air into the transparent element 760. This is shown in Figure 8 which shows a close-up view of three of the louvres 710 of Figure 7 and the associated transparent elements 760.

A single light ray 812 of the image light formed and output by the waveguide 740 at the transmission surface 742 is shown in Figure 8. Figure 8 shows how each transparent element has a parallelogram structure. In particular, the top surface 720 of each transparent element 760 is parallel to a bottom surface 806. In other words, the top and bottom surface 720, 806 correspond to one another and the thickness of the transparent element 760 (i.e. the distance between the top surface 720 and the bottom surface 806) is constant. The single light ray 812 is initially output from the waveguide 740 at an angle such that the single light ray 812 is parallel to the adjacent louvre. When the single light ray 812 is input into the transparent element 760, the change in refractive index at the air / transparent element boundary causes the direction / angle of the single light ray 812 to deviate slightly. When the single light ray 812 is output from the transparent element 760, the change in refractive index at the transparent element / air boundary causes the direction / angle of the single light ray 812 to deviate slightly in an opposite direction to the air /transparent element boundary. Advantageously, because the top and bottom surfaces of the transparent element 760 are parallel, the overall shift in light rays passing through transparent element 760 will be constant for all light rays at all positions. Thus, while the transparent element 760 may cause a slight positional shift in the light rays emitted, this shift does not cause distortion of an image viewed at the eye-box.

Sunlight that is input into the transparent element 760 will also be refracted by the transparent element. Sunlight is represented by single ray 802 in Figure 8. Figure 8 shows how 802 is deviated / shifted slightly as a result of refraction, but this does prevent the sunlight from eventually being absorbed by the louvres 710.

Above, it has been described how a (spatial) overlap of louvres 710 ensures that sunlight cannot escape being absorbed by a louvre. This (spatial) overlap comprises the proximal end of one of the of louvres 710 being in shadow of the distal end of another of the louvres 710. However, in some embodiments, a spatial overlap may not be strictly necessary. This is because the transparent element can be arranged so that the refraction effect caused by the transparent element steers the sunlight towards a nearby louvre, as shown in Figure 8. The upshot of this is that the reflection suppression device may optically appear to have overlapping louvres, even if the louvres do not (quite) spatially overlap. This may be referred to as an optical overlap. So, in some embodiments, the louvres 710 may not spatially overlap but do at least optically overlap. In such cases, the louvres 710 may still be referred to as overlapping.

### Methods of Manufacture

Generally, there are provided methods for manufacturing reflection suppression devices having the glare suppression advantages and mechanical robustness and rigidity of the reflection suppression device described in relation to Figure 7. These methods all allow for mass production of such reflection suppression devices with high speed and at low cost.

Each of the methods comprises a first step of forming a first component and a second step of forming a second component. The first component corresponds to the support structure shown in Figure 7. The second component corresponds to the array of louvres 706 shown in Figure 7. In more detail, the first step comprises processing a transparent material to form a serrated surface, wherein processing the transparent material comprises at least one selected from the group comprising extruding, injection moulding, hot embossing or cutting the transparent material. The second step comprises processing a light absorbing material to form a plurality of louvres arranged in an array, wherein processing the light absorbing material comprises at least one selected from the group comprising: adjoining, gluing, painting or supporting the light absorbing material in a support structure. The method further comprises at least partially fixing the first component and the second component together such that a periodicity of the serrated surface (of the first component) is equal to a periodicity of the array of louvres (of the second component), and optionally the periodicity of the two components is substantially in-phase. This fixing step may be part of the first or second manufacturing steps.

Herein, a number of specific examples of methods are described by way of example only of the principles described above. It should be clear that these examples are not limiting.

### First Example

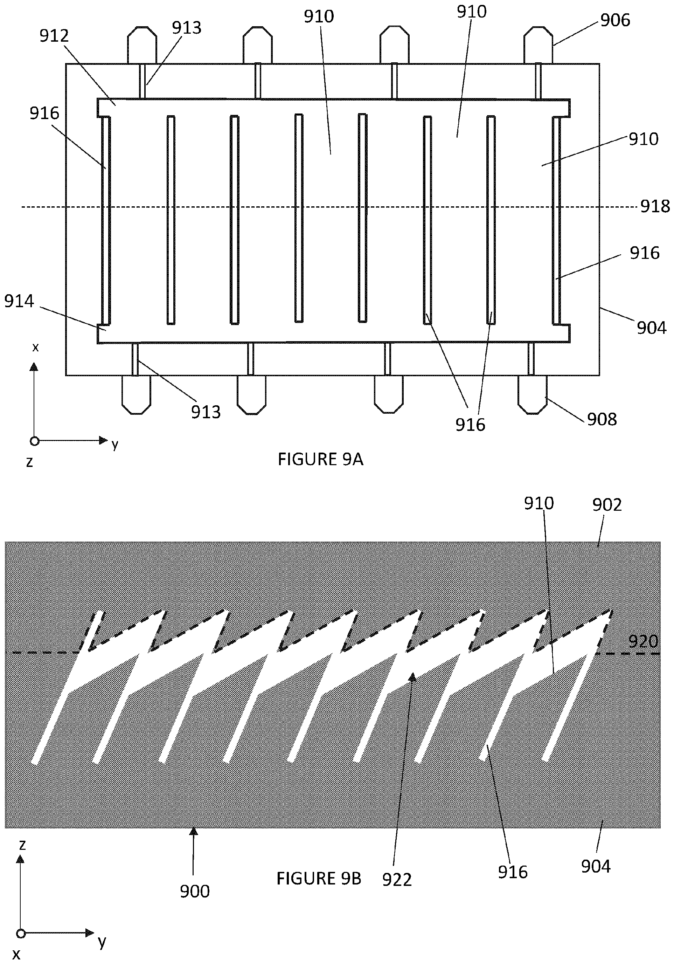

A first example of a method of manufacturing a reflection suppression device is described in relation to Figures 9A, 9B, 10A, 10B, 11A and 11B.

The first example of the method comprises injection moulding the molten transparent material to form first component of the reflection suppression device. Before the injection moulding step is carried out, a plurality of strips of light absorbing material are arranged in an array within supports defined in the mould used in the injection moulding processes to form the second component. Thus, following injection moulding the molten transparent material (and subsequent cooling of the material), an integrally formed reflection suppression device is formed in which the array of louvres (second component) are fixed to the light absorbing material of the first component as a result of injection moulding.

An injection mould 900 for manufacturing the reflection suppression device by injection moulding is shown in Figure 9A and 9B. The injection mould 900 comprises two primary plates: a first primary plate 902 and a second primary plate 904. The first and second primary plates 902, 904 are separable from one another. Each of the first and second primary plates 902, 904 comprise a body comprising indentations. When the first and second primary plates 902, 904 are brought together, one or more cavities are defined by the indentations in the respective bodies.

Figure 9A is a schematic view of the second primary plate 904 from above (in the x-y plane), separate from the first primary plate. The second primary plate 904 comprises a plurality of input ports 906 and a plurality of output ports 908. The example of Figure 9 comprises four each of input and output ports. This is merely exemplary. There could be any number of input and output ports and the number of input ports may be different to the number of output ports. The second primary plate 904 further comprises a plurality of first indentations 910. Each first indentation 910 is shaped to form at least a portion of one of the transparent elements 760 as shown in Figure 7. Each of the first indentations 910 is parallel. A first (top) end of each first indentation 910 is connected to a second indentation 912. A second (bottom) end of each first indentation 910 is connected a third indentation 914. Each of the input ports 906 is connected to the second indentation 912 by runner lines 913. Each of the output ports 908 is connected to the third indentation 914. The second primary plate 904 further defines slots 916 formed in the body of the second primary plate 904. Each of first indentations 910 is separated by a slot 916. Each slot 916 is arranged to receive a strip of light absorbing material.

Figure 9B shows a cross-sectional view of the mould 900, the cross-section being in a plane that is parallel to the y and z-axis and through line 918 shown in Figure 9A. The first and second primary plates 902, 904 are shown together in Figure 9B. The dotted line 920 represents the interface between the two plates. Figure 9A shows how first indentations 910 in the second primary plate 904 match corresponding indentations in the first primary plate 902. This forms a cavity 922. A single cavity 922 is formed in the example of Figure 9A and 9B because the first indentations 910 are all connected to one another by the second and third indentations.

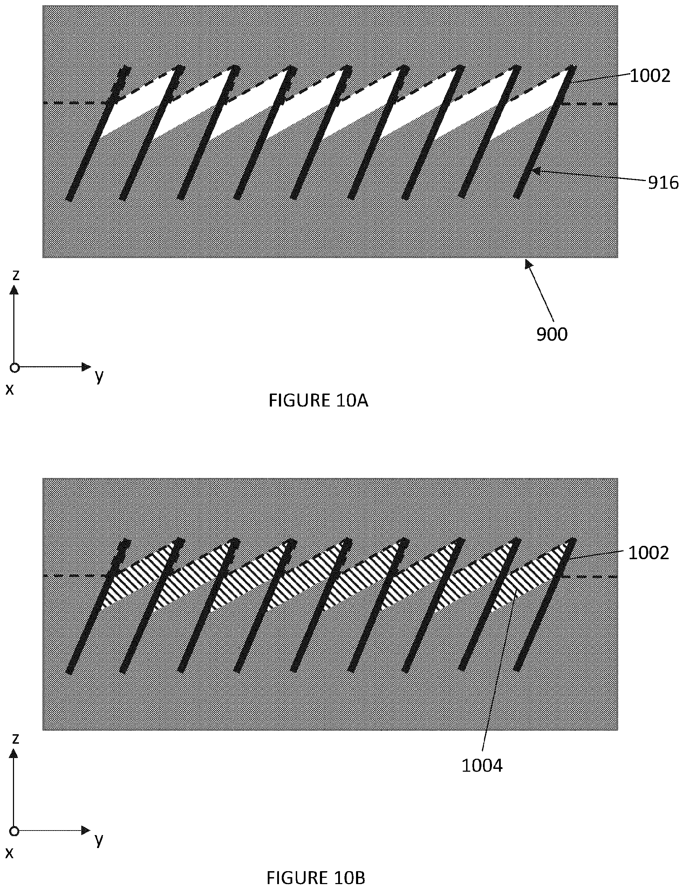

Figures 10A and 10B show steps of a method for injection moulding a reflection suppression device using the mould of Figures 9A and 9B. Figure 10A shows a step of forming a second component of the suppression device by supporting strips 1002 of a light absorbing material in the slots 916 of the mould, the slots 916 acts as a support structure for the strips 1002. In this example, the strips comprise a strip of metal coated in an opaque material. In other examples, the strips may not comprise the coating. In other examples, the strips may be formed of light absorbing plastic or rubber. The strips 1002 form the array of louvres in the manufactured suppression device. The slots 916 are arranged (in particular, angled) so that the strips 1002 are supported in the desired position and orientation required of the louvres in the final product. Figure 10B shows a step of forming a first component of the suppression device by injection moulding molten transparent material 1004 using the mould 900. In particular, the molten transparent material 904 is injected (under pressure) through the input ports 906. The molten transparent material 1004 is then forced through the runner lines 913 and on into the cavity 922 defined by the various indentations of the mould. The molten transparent material 1004 is forced first into a portion of the cavity 922 defined by the second indentation 912 and fills this portion of the cavity 922. So, the flow of molten transparent material 1004 is substantially in the y-direction. The molten transparent material 1004 is then forced into each of the portions of the cavity 922 defined by the first indentations 910 and fills those portions. The molten transparent material 1004 then passes into and fills a portion of cavity 922 defined by the third indentation 912 before finally exiting the mould out of exit ports 908 (via runner lines 913). The supply of molten transparent material at the input ports is stopped after a predetermined time period. The mould is then cooled so that the molten transparent material sets. Because the cavity 922 of the mould 900 is filled by transparent material, the shape of the transparent material corresponds to the shape of the cavity 922 (and so the shape of various indentations). During manufacture, the molten transparent material is forced against the strips 1002 of light absorbing material. When the transparent material sets to form the first component, the strips 1002 of light absorbing material are fixed to the light absorbing material. In other words, the first component and the second component are fixed together with a portion of each of the louvres of the second component being embedded in the first component. In this way, an integrally formed reflection suppression device is formed. The reflection suppression device can then be removed from the mould. The slots and indentations of the mould are arranged such that the first component has a (top and bottom) serrated surfaces and the periodicity of the serrations of the serrated surface is equal to the periodicity of the array of louvres.

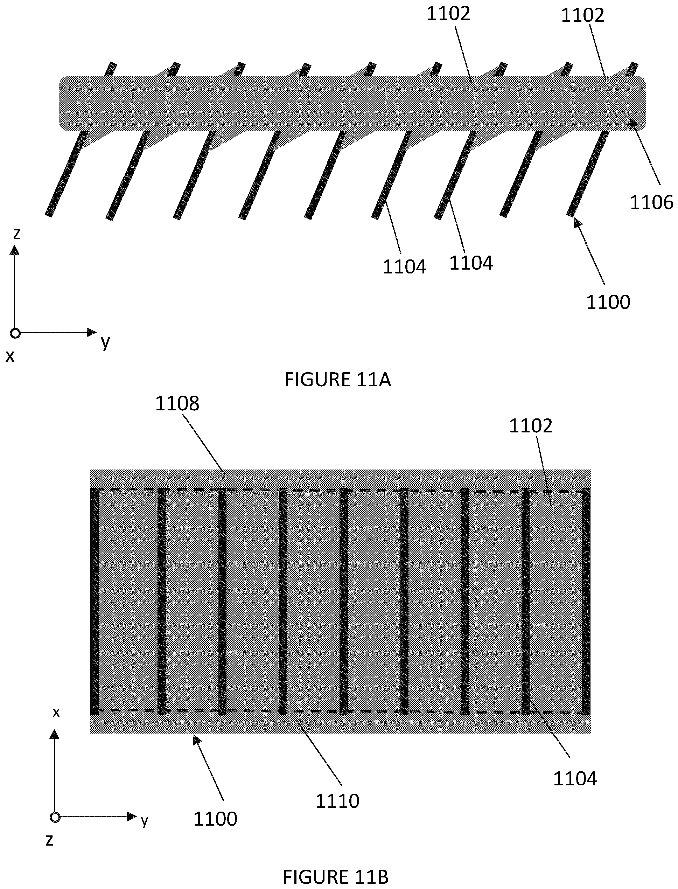

Figure 11A and 11B show different schematic views of a reflection suppression device 1100 resulting from the method shown in Figure 9 and 10. Figure 11A is a side view of the reflection suppression device 1100. Figure 11B is a cross-sectional view of the reflection suppression device 1100, the cross section being taken in the x-y plane. The reflection suppression device 1100 comprises a first component comprising a plurality of transparent elements 1102 integrally formed with an array of louvres 1104 (the second component). The transparent element 1102 and louvres 1104 are arranged in the same way as the transparent elements and louvres described in relation to Figure 7 (in particular, in relation to glare suppression). The main difference is that Figure 11A and 11B additionally show how the reflection suppression device 1100 in this embodiment comprise a frame 1106. The frame 1106 comprises a first side 1108 and a second side 1110. The first and second sides of the frame 1108, 1110 are formed by the portions of the cavity of the mould defined by the second and third indentations 912, 914. So, in the same way that the second and third indentations 912,914 are connected to the ends of each of the first indentations, the first and second sides of the frame are connected to ends of each of the transparent elements 1102. The frame 1106 improves the mechanical strength of the reflection suppression device 1100 without interfering with the optical performance of the reflection suppression device or an associated head up display.

### Second Example

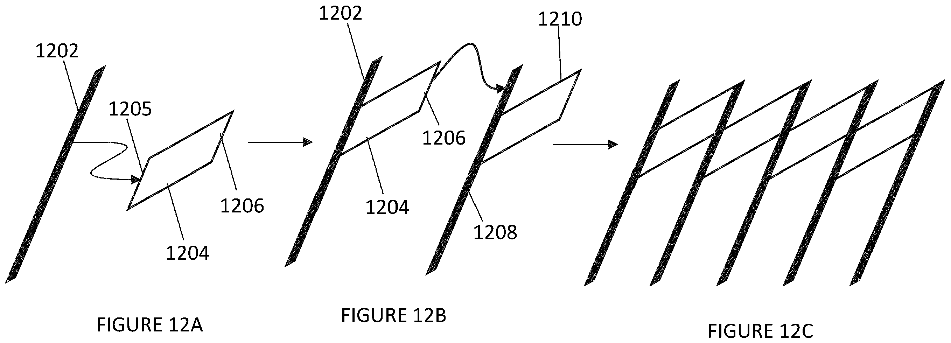

A second example of a method of manufacturing a reflection suppression device is described in relation to Figure 12A to 12C.

The second example of the method comprises forming a plurality of pieces of transparent material (i.e. plurality of transparent elements) and then assembling the first component from the plurality of transparent element, rather than forming the first component as a single piece as in the first example. Each of the plurality of transparent elements is formed by one of extruding, injection moulding or cutting a source of transparent material into a desired shape (in this example an elongated shaping having a cross-section in the shape of a parallelogram). The step of assembling the first component further comprises providing a plurality of strips of light absorbing material and assembling the strips of light absorbing material and the transparent elements in an alternating configuration.

Figure 12A shows a first strip 1202 of light absorbing material and a first transparent element 1204 (being elongated and having a parallelogram shaped cross-section). The first transparent element 1204 has been formed by extruding, injection moulding or cutting a source of transparent material into the desired shape. Figure 12A shows a first step of assembling the first component. The first step comprises gluing a first end 1205 of the first transparent element 1204 to a first side of the first strip 1202 of light absorbing material. The glue is then set or cured. Figure 12B shows a second step of assembling the first component. The second step comprises gluing a second end 1206 of the first transparent element 1204 to a second side of a second strip 1208 of light absorbing material. The glue is then set or cured. The second strip 1208 of light absorbing material already has a second transparent element 1210 affixed to its first side with glue. Each pair of strip of light absorbing material fixed to a transparent element may be considered a repeat unit. A plurality of repeat units may be fixed together to build up a larger structure. This is shown in Figure 12C in which four repeat units have been attached together. The last repeat unit has an additional strip of light absorbing material fixed to the second side as an endcap. An advantage of assembling a reflection suppression device in this way is that the a structure of any size may be built without the need for a new mould (which could be expensive). The glue used in this example preferably has a refractive index that substantially matches the refractive index of the transparent material (when the glue is set or cured). The step of setting the glue may simply comprise waiting for a predetermined period of time. However, in some examples, the glue may be UV curable glue and so the step of setting or curing the glue may comprise applying UV radiation to the joint.

The final structure of a reflection suppression device formed in the method of the second example is substantially similar to that of the first example. In particular, a first component comprising a serrated top and bottom surface is formed in combination with a second component comprising an array of louvres and such that a periodicity of the serrated surface is equal to a periodicity of the array of louvres.

### Third Example

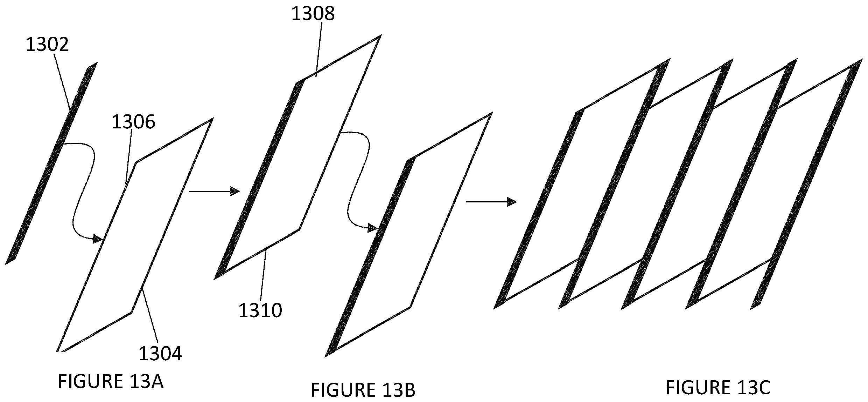

A third example of a method of manufacturing a reflection suppression device is described in relation to Figure 13A to 13C. The third example method is substantially the same as the second example. However, the cross-sectional shape of each of the plurality of transparent elements is different in the third example relative to the second example. In particular, each repeat unit in the third example comprises a strip 1302 of light absorbing material and a transparent element 1304. However, in the second example, the cross-section of the transparent element 1204 is such that only a relatively small portion of the first side of the strip 1202 is in contact with (glued to) transparent element 1204. Instead, in the third example, the cross-section of the transparent element 1304 is such that the entirety of a first side 1306 of the strip 1302 is in contact with (glued to) transparent element 1304. In particular, a thickness of the transparent element 1304 between its top and bottom surface (1308 and 1310 respectively) is equal to the length of strip 1302 and greater than the corresponding thickness of transparent element 1304.

The final structure of a reflection suppression device formed the method of the third example differs to the previous example only because of the thicker transparent element. Glare is suppressed in exactly the same way as in the method shown in Figure 7.

An advantage of the structure resulting from the method of the third example is that the thicker transparent element (relative to the first and second example) improves the mechanical strength and stability of the manufactured reflection suppression device. However, the thicker the transparent element, the more HUD light that will be absorbed reducing the intensity of the HUD light received at the eye-box. Thus, there is a choice to be made as to whether to prioritise strength or light intensity. As will be clear, intermediate thicknesses of transparent element, between the thicknesses shown in the second and third examples, are possible. A thickness can be chosen to achieve the desired balance of mechanical strength and intensity of output light.

In a modification of the third example, the louvres may be formed by painting at least one sidewall of each of the transparent elements 1304 with a black paint before the transparent elements are assembled. This may replace the step shown in Figure 13A.

### Fourth Example

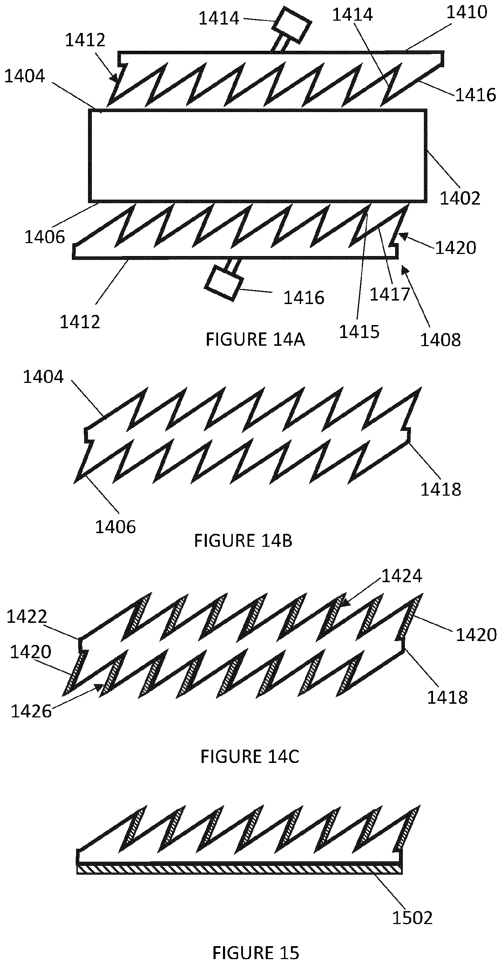

A fourth example of a method of manufacturing a reflection suppression device is described in relation to Figure 14A to 14C.

Like the first example, the fourth example of the method comprises forming the first component (of transparent material) as a single component. In particular, the fourth example comprises hot embossing a block or slab of transparent material using a tool (hot embossing stamp) having a repeating prismatic structure. The method of the fourth example further comprising adjoining or gluing strips of light absorbing material on to the embossed transparent material or painting light absorbing material on to the embossed transparent material.

Figure 14A shows a first step of forming the first component. A block 1402 of transparent material has been provided. The block of transparent material, prior to embossing, has a top surface 1404 and a bottom surface 1406. The top surface 1404 is parallel to the bottom surface 1406. The first step of forming the first component comprises using a hot-embossing tool 1408 to shape the both the top surface 1404 and the bottom surface 1406 to have a serrated structure. As shown in Figure 14A, the tool 1408 comprises a first stamp 1410 adjacent the top surface 1404 and a second stamp 1412 adjacent the bottom surface 1406. The first stamp 1410 comprises a repeating prismatic structure 1412 comprising a front facet 1414 and a back facet 1416. The front and back facets together at least partially define a prism which is repeated along the length of the first stamp 1410. The second stamp 1412 comprises a repeating prismatic structure 1420 which corresponds to the repeating prismatic structure 1412 of the first stamp 1410. The step shown in Figure 14A comprises bringing the first stamp and second stamp 1410, 1412 together using movement means 1414,1416 at the same time to compress and shape the block of transparent material in accordance with the prismatic shape of the stamps.

Figure 14B show an embossed block 1418 of transparent material (i.e. the block after the step of Figure 14A). The embossed top surface 1404 has a structure corresponding to the prismatic shape of the first stamp 1410 and the embossed bottom surface 1406 has a structure corresponding to the prismatic shape of the second stamp 1412. In particular, the serrated structure is formed from a plurality of prismatic shapes comprising a first facet 1415 and a second facet 1416 corresponding, respectively, with the first and second facets 1414 and 1416 of the stamp. So, Figure 14A and 14B show how the first component can be formed as a single component. Figure 14C shows a step of forming an array of louvres, fixed to the embossed block 1418, as a second component. In some examples, each louvre 1420 of the array of louvres is in the form of a strip of light absorbing material which is adjoined or glued on to appropriate surfaces of the first component. In some examples, each louvre 1420 of the array of louvres is painted on to appropriate surfaces of the first component.

The structure of the reflection suppression device formed in the fourth example (shown in Figure 14C) differs to the structure formed in the first example. Rather than each louvre being separated by a single transparent element (having, for example, a parallelogram shape), a core 1422 of the first component extends unbroken along the full length of the first component. The core 1422 separates the top serrated surface 1404 from the bottom serrated surface 1406. The core 1422 also separates the louvres 1420 into a top layer 1424 and a bottom layer 1426. Despite the difference in structure, the inventors have found that the reflection suppression device of Figure 14C is as effective as the reflection suppression device formed in first example. Furthermore, the structure maintains a constant thickness between parallel surfaces of the top and bottom serrated surfaces 1406. So, like in the earlier examples, HUD light is not dispersed by refraction (although each HUD ray may be translationally shifted slightly).

In other examples, the same structure of reflection suppression device could be formed by injection moulding transparent material into the shape shown in Figure 14B, or by cutting or even extruding the shape shown in Figure 14B from a block of transparent material. Louvres would then be fixed to the shaped transparent material as in Figure 14C.

### Fifth Example

A fifth example of a method of manufacturing a reflection suppression device is described in relation to Figure 15. The fifth method of manufacturing is substantially the same as the fourth method of manufacturing. However, the hot embossing tool used in the fifth example comprises only the first (top) stamp 1410 and no second (bottom) stamp. Thus, the first component formed by hot embossing comprises only a top serrated surface 1502.

A reflection suppression device formed by the fifth method of manufacturing is shown in Figure 15. The inventors have found that this structure is similarly able to suppress glare as the structure shown, for example, in Figure 7. However, a problem with the structure of Figure 15 is that the transparent material has a varying thickness along the length of the reflection suppression device. This is unlike the previous examples in which the thickness between corresponding serrations of top and bottom surfaces is constant. As described previously, the advantage of having constant thickness is that dispersion of HUD light relayed from different portions of the transmission surface is avoided. The geometry of the first component in the reflection suppression device of Figure 15 does not avoid this dispersion. Optionally, in order to compensate for the dispersion, the method of the fifth example may further comprise applying a diffractive film 1502 to the bottom surface of the first component. The diffractive film can be provided with a diffraction pattern arranged to compensate for the changing thickness of the transparent first component.

### Sixth Example

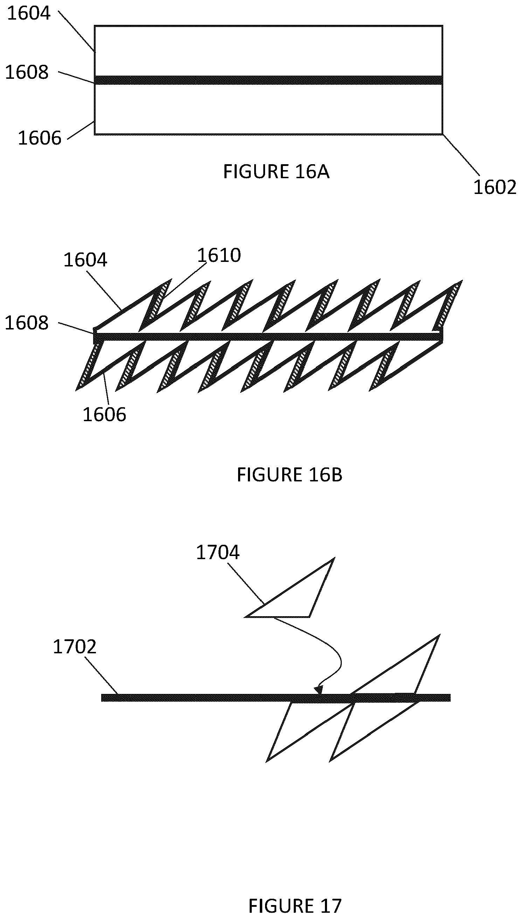

A sixth example of a method of manufacturing a reflection suppression device is described in relation to Figure 16A and 16B. The sixth method of manufacturing is exactly the same as the fourth method of manufacturing. However, the block of transparent material 1602 to be embossed has a more complicated structure in the sixth example than in the fourth example. In particular, the block 1602 comprises a layered structure (as shown in Figure 15A). Top and bottom layers 1604,1606 of the block 1602 are formed of silicone. A core layer 1608 is positioned between the top and bottom layers 1604, 1606. The core layer is formed of a material that is harder than silicone, for example a hard transparent plastic material. When the block of transparent material 1602 is embossed, the relatively softer silicone top and bottom layers 1604,1606 are shaped by the embossing tool. The core layer 1608 remains unshaped. Louvres 1610 are then glued to or painted on the first component. A reflection suppression device manufactured according to the sixth example is shown in Figure 16B.

The advantage of manufacturing the first component from a layered block as described above is that the portions of the block (i.e. the top and bottom layers 1604,1606) are formed of a relatively softer material that requires less effort to shape / emboss while the stronger core layer 1608 ensures that overall structure has enough mechanical strength to support the louvres.

### Seventh Example

A seventh example of a method of manufacturing a reflection suppression device is described in relation to Figure 17. The seventh method comprises forming a first component of the reflection suppression device by: providing a core layer 1702; providing a plurality of transparent elements 1704; and assembling the first component by attaching (gluing) the plurality of transparent elements 1704 on to the core layer 1702. The core layer 1702 corresponds to the core layer described in the sixth example. The transparent elements 1704 are each formed by injection moulding, extrusion or cutting (similarly to second and third examples). The transparent elements 1704 are shaped to correspond to a single serration of the serrated surface of sixth example. A first plurality of the transparent elements 1704 are glued to a first side of the core layer 1702 and a second plurality of the transparent elements 1704 are glued to a second side of the core layer 1702. Once the first component has been formed as described, an array of louvres may be adjoined, glued or painted on to appropriate surfaces of the first component to form a structure resembling that shown in Figure 16B.

### Eighth Example

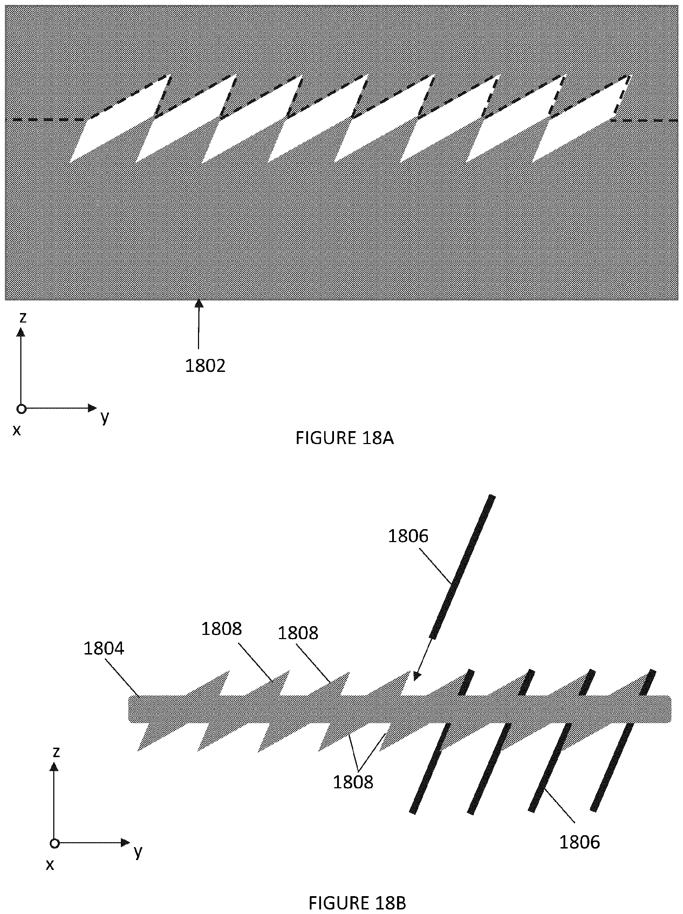

An eighth example of a method of manufacturing a reflection suppression device is described in relation to Figure 18A and 18B. The eight example is another method comprising injection moulding and is effectively a modification of the first example. In the eight example, an injection mould 1802 is used to provide a transparent first component. The injection mould 1802 is similar to the injection mould 900 of the first example. However, the injection mould 1802 does not comprise slots for receiving strips of light absorbing material. Instead, the first indentations of the mould are separated by the body of the mould 1802. This is shown in the cross-section of the mould shown in Figure 18A. The result is that the injection moulded first component comprises a plurality of members each member forming a serration and being separated adjacent members by a gap. Molten transparent material is injected into the mould in the same way as in the first example and then cooled / set / cured to form an integrally formed first component which is then removed from the mould. Unlike in the first example however, the first component is manufactured entirely separately from the louvres. So, the method of the eighth example requires an additional step of fixing strips of light absorbing material to the first component 1804. This comprises inserting strips of light absorbing material 1806 into the gaps formed between members 1808. Glue is used to fix the strips of light absorbing material 1806 in place. This is show in Figure 18B.

### Ninth Example

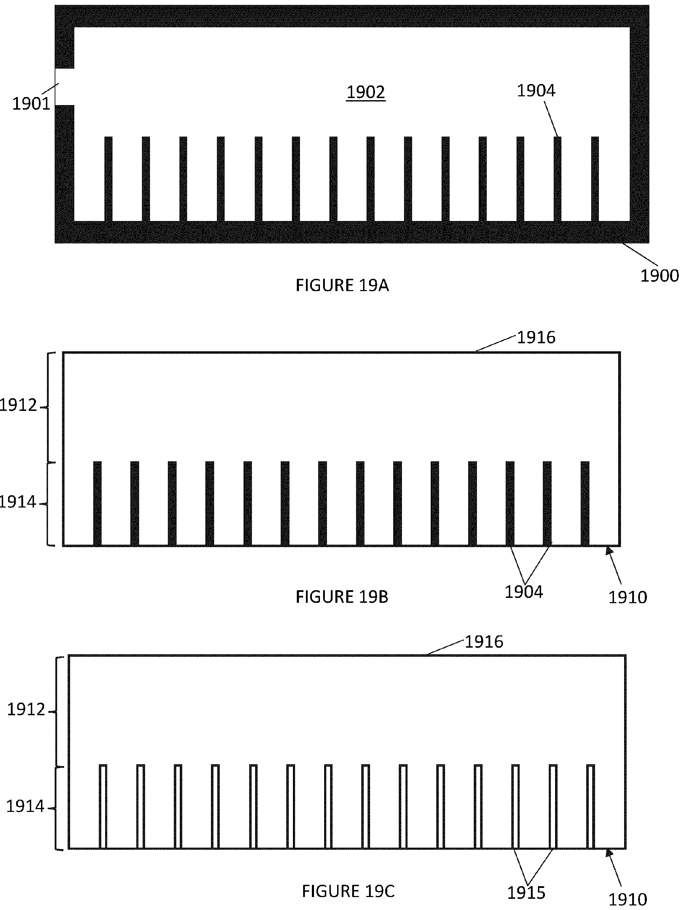

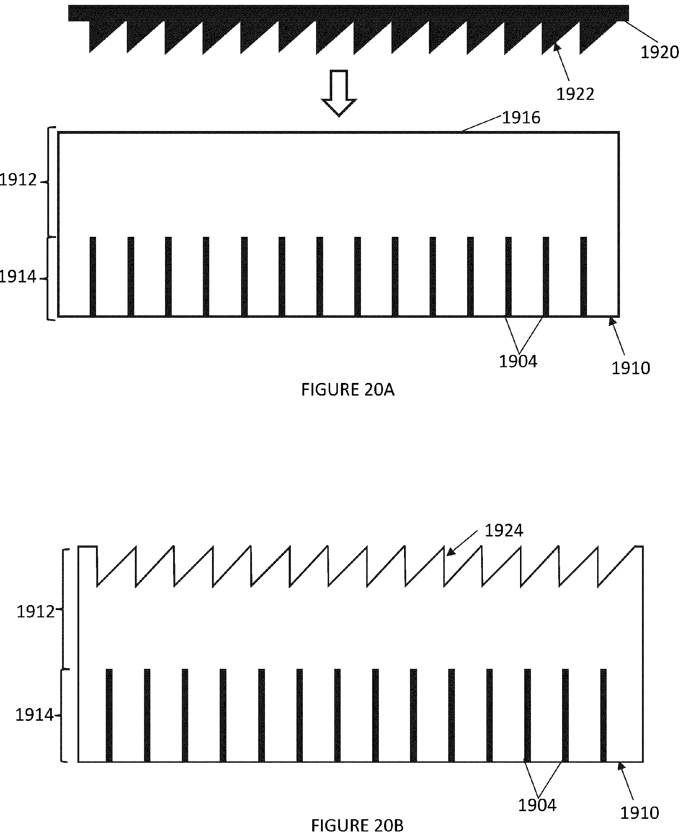

A ninth example of a method of manufacturing a reflection suppression device is described in relation to Figures 19A to 19C, 20A and 20B. The ninth example is another method comprising injection moulding. The ninth method comprises injection moulding molten transparent material into a mould to form a first component of the reflection suppression device.

An injection mould 1900 for manufacturing the reflection suppression device by injection moulding is shown in Figure 19A. Figure 19A is a cross-sectional view of the mould 1900. The mould 1900 comprises an input port 1901 and a mould body 1902. The mould further comprises a plurality of inserts 1904. The method comprises injecting molten transparent material into an input port 1901 of the mould to fill the mould body 1902 and then allowing the molten transparent material to cool / set / cure. This forms a transparent body 1910. The transparent body 1910 is then removed from the mould.

In some examples, the plurality of inserts 1904 become integrally formed with the transparent body 1910 and are embedded in the transparent body 1910. In such examples, the inserts 1904 are removed from the mould together with the transparent body 1910. This is shown in Figure 19B. In Figure 19B, the inserts 1904 form a plurality of louvres in the transparent body 1910. The inserts 1904 comprise light absorbing material. The transparent body 1910 comprises a top portion 1912 and a bottom portion 1914. The inserts 1904 (forming louvres) are contained in the bottom portion.

In some examples, the plurality of inserts 1904 remain part of the mould 1900 (for example, are integrally formed with the body 1902 of the mould). In such examples, the inserts 1904 form blind channels 1915 in the bottom portion 1914 of the transparent body 1900 when removed from the mould 1900. The method further comprises forming an array of louvres by filling the inserts with light absorbing material.

The method of the ninth example further comprises further processing the transparent body 1910 to form a serrated surface. This is shown in Figure 20A and B. Figure 20A shows hot embossing a top surface 1916 of the transparent body 1902 using a stamp 1920. The stamp 1920 comprises a serrated surface 1922 such that the stamp 1920 forms a corresponding serrated surface 1924 in the top portion 1912 of the transparent body 1902.

### Additional features

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims and their equivalents.

## Claims

1. A method of manufacturing a reflection suppression device, the method comprising:
a first step of forming a first component of the reflection suppression device by processing a transparent material to form a serrated surface, wherein processing the transparent material comprises at least one selected from the group comprising extruding, injection moulding, hot embossing or cutting the transparent material; and
a second step of forming a second component of the reflection suppression device by processing a light absorbing material to form a plurality of louvres arranged in an array, wherein processing the light absorbing material comprises at least one selected from the group comprising: adjoining, gluing, painting or supporting the light absorbing material in a support structure,
wherein at least one of the first and second steps comprises at least partially fixing the first component and second component together such that a periodicity of the serrated surface is equal to a periodicity of the array of louvres.

2. A method of manufacturing a reflection suppression device as claimed in claim 1, wherein the serrated surface of the first component is a first serrated surface and wherein the first step of the method further comprises processing the transparent material to form a second serrated surface opposite to the first serrated surface.

3. A method of manufacturing a reflection suppression device as claimed in claim 1 or 2, wherein the first step comprises integrally forming the first component as a single component.

4. A method of manufacturing a reflection suppression device as claimed in claim 1, 2 or 3, wherein the transparent material is provided in the form of an unshaped piece of material and wherein the first step comprises extruding, hot embossing or cutting the unshaped piece of material to form the first component; or wherein the first step comprises injection moulding the transparent material into a mould.

5. A method of manufacturing a reflection suppression device as claimed in claim 4, wherein the transparent material is a liquid during the first step of the method.

6. A method of manufacturing a reflection suppression device as claimed in claim 4 or 5, wherein the second step comprises supporting the light absorbing material in a support structure, the support structure being defined within the mould; optionally wherein the second step of the method is performed before the first step of the method.

7. A method of manufacturing a reflection suppression device as claimed in any one of claims 5 or 6, wherein the mould comprises one or more cavities arranged such that the injection moulded first component comprises a frame and a plurality of serrated transparent elements.

8. A method of manufacturing a reflection suppression device as claimed in any preceding claim, wherein the second step comprises forming the louvres such that each louvre has a width defined between a proximal end and a distal end and each louvre is arranged at an orientation angled relative to the plane containing the reflection suppression device, and wherein the separation between adjacent louvres is such that the distal end/edge of one louvre overlaps with the proximal end of the adjacent louvre.

9. A method of manufacturing a reflection suppression device as claimed in any preceding claim, wherein the light absorbing material comprises a light absorbing paint and wherein the second step of the method comprises painting; or wherein the light absorbing material is a continuous strip and wherein the second step of the method comprises adjoining or gluing the light absorbing material.

10. A method of manufacturing a reflection suppression device as claimed in any of claims 1, 2 or 4 to 9, wherein the first step comprises forming a plurality of transparent elements.

11. A method of manufacturing a reflection suppression device as claimed in claim 10, wherein first step comprises assembling the plurality of transparent elements to form the first component.

12. A method of manufacturing a reflection suppression device as claimed in claim 11, wherein the first step of the method may comprise at least partially fixing a plurality of the transparent elements on to a transparent substrate

13. A method of manufacturing a reflection suppression device as claimed in claim 12, wherein the transparent substrate is formed of a first transparent material and the transparent elements is formed of a second transparent material, the second transparent material being softer than the first transparent material.

14. A method of manufacturing a reflection suppression as claimed in any preceding claim, further comprising a third step of at least partially fixing a diffractive film to the first component on a surface of the first component opposite to the serrated surface.

15. A head-up display for a vehicle, wherein the head-up display comprises an optical component having a reflective surface arranged, during head-up display operation, in a configuration that is conducive to sunlight glare; and a reflection suppression device disposed on the optical component to receive sunlight on an optical path to the reflective surface, wherein the reflection suppression device is a reflection suppression device manufactured according to any one of the preceding claims, the reflection suppression device comprising a first component formed of transparent material and having a serrated surface and a second component comprising a plurality of louvres in an array, each louvre comprising a light absorbing material; and wherein the first component and the second component are at least partially fixed together such that a periodicity of the serrated surface is equal to a periodicity of the array of louvres.
